# EUROPÄISCHE PATENTSCHRIFT

(11) **EP 2 360 065 B1**
(45) Veröffentlichungstag und Bekanntmachung des Hinweises auf die Patenterteilung: **17.04.2013**
(21) Anmeldenummer: 11153758.5
(22) Anmeldetag: 09.02.2011
(51) Int. Cl.: B60R 19/34

(54) **Aktuatorik sowie Vorrichtung und Verfahren zum adaptiven Abbau von Crashenergie**
Control device, device and method for adaptive degeneration of crash energy
Système d'actionnement ainsi que dispositif et procédé de dégradation adaptative de l'énergie d'un crash

(30) Priorität: 16.02.2010 DE 102010001990
(43) Veröffentlichungstag der Anmeldung: 24.08.2011
(73) Patentinhaber: Robert Bosch GmbH, 70442 Stuttgart (DE)
(72) Erfinder: Friedrich, Thomas, 71691, Freiberg A. N. (DE); Nagel, Willi, 71686, Remseck/Hochdorf (DE); Goetzelmann, Bernd, 71277, Rutesheim (DE)

(56) Entgegenhaltungen:
- WO-A1-2011/035952
- DE-C2- 19 745 656
- US-A1- 2005 087 410

## Beschreibung

### Stand der Technik

Die Erfindung betrifft eine Aktuatorik sowie eine Vorrichtung bzw. ein Verfahren zum adaptiven Abbau von Crashenergie nach der Gattung der unabhängigen Patentansprüche.

Aus der Offenlegungsschrift EP 1 792 786 A2 ist eine Crashbox für ein Kraftfahrzeug bekannt, die ein gehäuseartiges Deformationsprofil mit einer längsträgerseitigen Flanschplatte aufweist und als Faltkonstruktion aus Metallblech ausgebildet ist. Das Deformationsprofil besteht aus zwei Schalenbauteilen, wobei an jedem Schalenbauteil ein Flanschplattenabschnitt angeformt ist. Die Schalenbauteile werden aus Ausgangsplatinen aus Metallblech gefaltet, anschließend zusammengesetzt und mittels Widerstandsschweißpunkten aneinander gefügt. Die Crashbox nimmt im Crashfall durch die Deformation des Deformationsprofils Energie auf, wobei die Energieaufnahmefähigkeit der Crashbox jedoch nicht einstellbar ist, d.h. es erfolgt keine Adaption der Crashbox an einen Crashvorgang.

Eine solche Adaption ist jedoch beispielsweise aus der Patentschrift DE 197 45 656 C2 bekannt. In der Patentschrift DE 197 45 656 C2 wird ein Pralldämpfer für ein Kraftfahrzeug beschrieben, der ein bei einem Fahrzeugaufprall verformbares Deformationselement umfasst, in dessen Weg ein Sperrteil hineinragt, mit welchem aufgrund der Krafteinwirkung beim Aufprall eine plastische Verformung des Deformationselements unter Absorption von Aufprallenergie herbeigeführt wird, wobei der Verformungswiderstand des Deformationselements durch eine Steuerung in einer zusätzlichen Deformationsstufe erhöht werden kann. Vorgeschlagen wird, dass sich Schieber an einem Deformationselement senkrecht zur Kraftrichtung bewegen und Deformationselemente dadurch sperren, so dass durch die Kraftwirkung diese Deformationselemente Crashenergie durch plastische Verformung aufgrund der Sperrung abbauen. Durch eine parallele Anordnung oder durch einen Ineinanderbau von solchen Deformationselementen ist eine Adaption auf den Crashvorgang möglich. Als weiteres Beispiel wird vorgeschlagen, ein Deformationselement durch eine Verjüngung zum Abbau von Crashenergie zu benutzen. Dabei ist ein Element zur Verjüngung fixiert und ein weiteres kann durch einen Schieber frei gegeben werden, um die Verjüngung zu reduzieren. Hierbei weist der Schieber mindestens zwei Schaltstellungen auf, in denen es in den Verschiebeweg des Deformationskörpers hineinragt, wodurch der Deformationskörper durch die Krafteinwirkung beim Aufprall weniger oder mehr plastisch verformt wird. Die mindestens zwei Schaltstellungen können in Abhängigkeit von einem Precrash-Signal oder einem Aufprallsignal gesteuert werden, wobei das Precrash-Signal beispielsweise von einer Rundumsichtsensorik wie einer Radarsensorik zur Verfügung gestellt werden kann. Die Bewegung des Schiebers erfolgt dabei radial, d.h. senkrecht zur Kraftrichtung und damit zur Längsachse des Deformationselements, das üblicherweise als Zylinder mit einer vorgegebenen Wanddicke ausgeführt ist.

Aus der nicht vorveröffentlichten Druckschrift WO 2011/035952 A1 sind eine Vorrichtung und ein Verfahren zum adaptiven Abbau von Crashenergie bekannt. Die beschriebene Vorrichtung umfasst ein im Crashfall deformierbares Deformationselement, welches zum Abbau der Crashenergie in einer Richtung eine erste Bewegung ausführt und dabei eine plastische Verformung erfährt, eine Verformungseinheit, welche mindestens ein Verformungselement zur Erzielung der plastischen Verformung aufweist, und eine Aktuatorik, welche in Abhängigkeit von einem Steuersignal die plastische Verformung für den adaptiven Abbau der Crashenergie einstellt. Hierbei ist die Aktuatorik für eine zweite Bewegung konfiguriert, um die plastische Verformung durch diese zweite Bewegung einzustellen, wobei in Folge dieser zweiten Bewegung die Aktuatorik das mindestens ein Verformungselement für die Einstellung der plastischen Verformung halten kann, und wobei eine Anzahl der von der Aktuatorik gehaltenen Verformungselemente vom Steuersignal abhängig ist. Zu diesem Zweck umfasst die Aktuatorik mindestens einen beweglichen Aktuator und eine Antriebseinheit zum Bewegen des mindestens einen Aktuators in Abhängigkeit vom Steuersignal, wobei der mindestens eine bewegliche Aktuator in einem korrespondierenden Freiraum axial entlang einer ersten Bewegungsachse zwischen zwei Endlagen verschiebbar angeordnet ist, und wobei die Antriebseinheit zum Verschieben des mindestens einen beweglichen Aktuators als Spuleneinheit mit mindestens einer Spule ausgeführt ist.

### Offenbarung der Erfindung

Die erfindungsgemäße Aktuatorik, insbesondere für eine Vorrichtung zum adaptiven Abbau von Crashenergie, mit den Merkmalen des unabhängigen Patentanspruchs 1 hat demgegenüber den Vorteil, dass das mindestens eine bewegliche Verstellelement in einem korrespondierenden Freiraum axial entlang einer ersten Bewegungsachse zwischen zwei Endlagen verschiebbar angeordnet ist, wobei eine Antriebseinheit zum Verschieben des mindestens einen beweglichen Verstellelements als Spuleneinheit mit mindestens einer Spule ausgeführt ist.

Die erfindungsgemäße Aktuatorik wird vorzugsweise in einer Vorrichtung zum adaptiven Abbau von Crashenergie mit den Merkmalen des unabhängigen Patentanspruchs 8 eingesetzt, die ein im Crashfall deformierbares Deformationselement, welches zum Abbau der Crashenergie in einer Richtung eine erste Bewegung ausführt und dabei eine plastische Verformung erfährt, eine Verformungseinheit, welche mindestens ein Verformungselement zur Erzielung der plastischen Verformung aufweist, und die erfindungsgemäße Aktuatorik umfasst, welche in Abhängigkeit von einem Steuersignal die plastische Verformung für den adaptiven Abbau der Crashenergie einstellt, wobei die Aktuatorik für eine zweite Bewegung konfiguriert ist, um die plastische Verformung durch diese zweite Bewegung einzustellen, wobei in Folge dieser zweiten Bewegung die Aktuatorik das mindestens eine Verformungselement für die Einstellung der plastischen Verformung halten kann, und wobei eine Anzahl der von der Aktuatorik gehaltenen Verformungselemente vom Steuersignal abhängig ist. Unter plastischer Verformung ist eine reversible oder irreversible Verformung eines Deformationselements aus Metall, Kunststoff, verstärktem Kunststoff oder einem anderen geeigneten Material zu verstehen. Die plastische Verformung kann beispielsweise durch Verjüngen, Falten, Biegen, Schälen, Abschaben usw. bewirkt werden.

Das erfindungsgemäße Verfahren zum adaptiven Abbau von Crashenergie mit den Merkmalen des unabhängigen Patentanspruchs 13 hat demgegenüber den Vorteil, dass mindestens ein Aktuator ausgehend von einer Initialkonfiguration, in welcher der Aktuator im Wesentlichen mittig zwischen zwei Endlagen angeordnet ist, in Abhängigkeit vom Steuersignal entlang der ersten Bewegungsachse im Freiraum axial verschoben wird, wobei der Aktuator in Abhängigkeit von der aktuellen Verschiebeposition den Außenumfang eines korrespondierenden beweglichen Verformungselements in mindestens einer Halteposition zumindest teilweise haltend überdeckt und in mindestens einer Freigabeposition freigibt.

Ausführungsformen der Erfindung ermöglichen in vorteilhafter Weise eine mehrstufige plastische Verformung des Deformationselements durch mehrere Verformungselemente, die beispielsweise als so genannte Matrizenplatten ausgeführt sind, die eine Öffnung aufweisen, durch die das Deformationselement getrieben wird. Der Kern der Erfindung besteht darin, die Verformungselemente zur Anpassung der Steifigkeit der Crashstruktur für den Abbau der Crashenergie durch den mindestens einen Aktuator zu halten, welcher beispielsweise von einer als mehrstelliger Hubmagnet ausgeführten Spuleneinheit mit mehreren Spulen axial in beide Richtungen entlang der Bewegungsachse des Deformationselements bewegt werden kann, d.h. beispielsweise entlang einer Fahrzeuglängsachse. Durch diese Anordnung ist es möglich, dass eine beliebige Anzahl von Verformungselementen durch die Aktuatorik gehalten werden kann und so zur plastischen Verformung beiträgt. Zudem ermöglichen Ausführungsformen der vorliegenden Erfindung, dass der mindestens eine Aktuator ausgehend von der Mittelposition bewegt wird. Bei der Verwendung von mehreren Aktuatoren stellen Ausführungsformen der vorliegenden Erfindung sicher, dass die mehreren Aktuatoren im Wesentlichen gleichzeitig bewegt werden. Damit ist eine sehr genaue Ansteuerung bzw. Einstellung der plastischen Verformung leicht möglich. Das Konzept gemäß dem Stand der Technik vermag dies nicht. Außerdem ermöglicht die erfindungsgemäße Vorrichtung, dass die Crashenergie nicht wie im Stand der Technik durch die so genannten Schieber abgestützt werden muss, die die Matrizenplatten halten, sondern die Abstützung der Crashenergie kann beispielsweise über das Gehäuse erfolgen, so dass die Aktuatorik mit dem beispielsweise als Ringanker ausgeführtem Aktuator und der Spuleneinheit einfacher und nicht so stabil hergestellt werden muss. Darüber hinaus hat dies auch einen positiven Einfluss auf die Dynamik.

Zudem ermöglichen Ausführungsformen der vorliegenden Erfindung durch die Verwendung des einen beispielsweise als Ringanker ausgeführten Aktuators eine kostengünstige, effiziente und bauraumoptimierte Anpassung der Crashstruktur zum Abbau der Crashenergie. Durch die Verwendung eines einteiligen Aktuators kommen nicht nur die Kostenvorteile zur Geltung, die aus der kleineren Anzahl der Haltemittel resultieren, sondern auch die Kostenvorteile, die sich aufgrund des deutlich einfacheren Aufbaus des Gesamtsystems ergeben. Die Überwachung von mehreren Haltemitteln ist aufwändig und entfällt in diesem Fall ebenso. Zudem entstehen keine Synchronisierungsfehler und es fallen keine relativen Steuerungsvorgänge an.

Durch die erfindungsgemäße Anordnung des Aktuators bei der Initialkonfiguration in der Mitte zwischen den beiden Endlagen ermöglicht das erfindungsgemäße Verfahren zum adaptiven Abbau von Crashenergie in vorteilhafter Weise eine deutliche Reduktion der Schaltzeit, da der Aktuator unabhängig von der angeforderten Steifigkeit maximal nur den halben Weg zwischen den beiden Endlagen fahren muss.

Die Hauptanforderung an den Aktuator ist die hohe Geschwindigkeit des Stellens. Der Aktuator kann stufenlos arbeiten. Dabei ist eine Verstellung in mehreren Stufen vorteilhaft, da letztendlich an Schnelligkeit gewonnen wird. Sind Masse und Reibung gering, ist eine hohe Aktuatordymnamik gewährleistet und die Schaltwege sind kurz. Die Schaltwege können durch eine optimierte Formgebung der Verformungselemente noch verkürzt werden, z.B. durch eine geringere Dicke am Außendurchmesser. Der Aktuator kann auch hohl gestaltet sein, dies bietet einen Gewichtsvorteil. Alternativ kann auch im "teeren" Innenraum des Aktuators ein magnetisch leitender Kunststoff eingesetzt werden, wodurch in einem hohlen Aktuator eine bessere magnetische Leitfähigkeit bewirkt werden kann, um in vorteilhafter Weise die Verstellzeiten zu reduzieren.

Vorliegend ist die Vorrichtung beispielsweise eine adaptive Crashbox, die zumindest Anschlüsse aufweist, um die Aktuatorik in Abhängigkeit vom Steuersignal anzusteuern. Es ist in Weiterbildungen möglich, dass die Vorrichtung selbst ein eigenes Steuergerät und/oder eine Sensorik aufweist, um den Crashvorgang bzw. einen Precrash-Vorgang zu erfassen, wobei das Steuergerät diese Sensorsignale verarbeitet und in Abhängigkeit davon Steuersignale erzeugt.

Der adaptive Abbau der Crashenergie bedeutet, dass die Crashenergie, die durch den Aufprall entsteht, durch die Crashbox in angepasster Weise durch eine plastische Verformung zumindest teilweise aufgenommen wird. Durch die Adaption können Kosten gespart werden. Der Insassenschutz sowie der Partnerschutz, d.h. der Schutz der Insassen des Unfallgegners werden dadurch verbessert.

Bei dem Deformationselement handelt es sich beispielsweise um einen Zylinder aus Stahl, der im Crashvorgang durch die erfindungsgemäße Vorrichtung plastisch verformt wird und durch diese plastische Verformung ergibt sich ein Abbau der Crashenergie. Neben Stahl können auch andere Materialien wie Kunststoffe oder Werkstoffverbunde oder ähnliches verwendet werden, aber auch andere Geometrien wie ein Konus, ein Zylinder mit einem elliptischen Querschnitt oder auch rechteckige oder quadratische Formen sind hier möglich. Ebenso sind Geometrien verwendbar, deren Wandstärken nicht über die Länge konstant sind, z.B. ein zylindrisches Rohr mit zunehmender Wandstärke. Das Deformationselement kann insbesondere hohl sein, z.B. ein einfaches Rohr, oder es kann in der Mitte bzw. in den Hohlräumen, wenn es sich um mehrere Hohlräume handelt, mit diversen Materialien angefüllt sein wie z.B. einem Aluminiumschaum. Dieser Aluminiumschaum bietet neben der höheren Robustheit gegen das Knicken den Vorteil, entweder eine höhere Energieabsorption gewährleisten zu können oder einen kleineren Rohrdurchmesser verwenden zu können. Eine weitere Alternative das Füllmaterial effektiv auszunutzen, ist eine geringere Wandstärke des Rohrs bzw. des Zylinders zu verwenden. Die Erfindung ermöglicht insbesondere eine sehr kompakte Bauweise der erfindungsgemäßen Vorrichtung und spart so Bauraum für andere Baugruppen ein.

Die Richtung, in der sich das Deformationselement bewegt, ist üblicherweise die Crashrichtung. Bei einem Frontalaufprall ist dies in Richtung der Längsachse des Fahrzeugs, die üblicherweise auch als X-Richtung bezeichnet wird. Durch diese Bewegung wird das Deformationselement gegen die Verformungselemente geführt und durch deren jeweilige Öffnungen hindurchgetrieben, so dass es zu der plastischen Verformung und damit zum Abbau der Crashenergie kommt.

Unter dem Steuersignal wird eben das Signal verstanden, das die Aktuatorik veranlasst, die entsprechende plastische Verformung einzustellen. Dieses Steuersignal kann von außerhalb der Vorrichtung stammen, beispielsweise von einem Sicherheitssteuergerät, insbesondere Airbagsteuergerät. Das Steuersignal kann jedoch auch intern innerhalb der Vorrichtung erzeugt werden, beispielsweise durch ein eigenes Steuergerät oder eine entsprechende Steuerschaltung. Das Steuersignal kann dabei analog ausgeführt sein oder auch digital. Eine digitale Ausführung verlangt eine entsprechende Auswertung durch die Aktuatorik. In einer einfachen Variante könnte das Steuersignal beispielsweise lediglich aus drei Pegeln bestehen, um drei verschiedene Stellungen der Aktuatorik zu signalisieren. Erfindungsgemäß bewegt sich diese Aktuatorik in der Achse der Richtung der ersten Bewegung, das ist also koaxial zur Crashrichtung bzw. zur Bewegungsrichtung des Deformationselements. Durch die Bewegung der Aktuatorik in dieser Richtung wird die plastische Verformung eingestellt. Dabei wird infolge der Bewegung der Aktuatorik wenigstens ein Verformungselement mit einer jeweiligen Öffnung, durch die das Deformationselement getrieben wird, für die Einstellung der plastischen Verformung gehalten. Dabei ist zu beachten, dass meistens ein weiteres Verformungselemente mit einer größeren Öffnung fest eingestellt ist und immer eine plastische Verformung bewirkt und durch die Aktuatorik auch gar nicht beeinflusst werden kann. Die Öffnung kann dabei einen Kreis, eine Ellipse oder rechteckige, sechseckige oder andere Formen aufweisen. Die Anzahl der zu haltenden Verformungselemente wird dabei durch das Steuersignal festgelegt. Werden verschiedene Verformungselemente mit jeweils unterschiedlichen Öffnungen verwendet, führt dies zu einer Adaption der plastischen Verformung. Durch die Aktuatorik wird demnach festgelegt, wie viele Verformungselemente hintereinander geschaltet werden. Nur ein vom Aktuator gehaltenes Verformungselement bzw. ein fest angeordnetes Verformungselement kann auch eine plastische Verformung bewirken, denn ansonsten würde das Deformationselement dieses Verformungselement aufgrund der vorhandenen Sollbruchstellen trennen und die entstandenen Segmente nach außen in den Freiraum schieben, d.h. die Segmente der nicht gehaltenen beweglichen Verformungselemente werden im Crashfall im Wesentlichen senkrecht zur Bewegungsachse weggeschoben.

Ein als Matrizenplatte ausgeführtes Verformungselement ist aus einem sehr stabilen Material hergestellt und verformt das Deformationselement beim Crash plastisch auf einen kleineren Durchmesser. Je grösser der Durchmesserunterschied zwischen dem Deformationselement und der Matrizenplatte ist, desto mehr Energie wird absorbiert. Eine Matrizenplatte verfügt über mindestens eine Sollbruchstelle. Vorteilhafterweise sind jedoch drei Sollbruchstellen vorgesehen, die alle 120° angeordnet sind. Wenn diese Sollbruchstellen brechen, teilt sich die Matrizenplatte in drei Teilen. Wird die Matrizenplatte vom Aktuator radial gestützt, brechen die Sollbruchstellen nicht und das Deformationselement wird plastisch verformt. Wird allerdings die Matrizenplatte nicht vom Aktuator gestützt, brechen die Sollbruchstellen aufgrund des Eindringens des Deformationselementes. Es entstehen drei Segmente, die keine plastische Verformung verursachen.

Alternativ kann eine Matrizenplatte direkt aus mindestens zwei einzelnen Segmenten gefertigt werden, dies erspart den Aufwand für die Herstellung der Sollbruchstellen aber dafür ist eine Zentrierung der einzelnen Segmente aufwändiger.

Die Matrizenplatten werden vorzugsweise beschichtet, beispielsweise mit Teflon oder einem Gleitlack, um wenig Reibung beim radialen Wegschieben der Elemente zu verursachen. Weiter können die Matrizenplatten auch am Außenumfang beschichtet werden, um das Gleiten des Aktuators zu vereinfachen.

Durch die in den abhängigen Ansprüchen aufgeführten Maßnahmen und Weiterbildungen sind vorteilhafte Verbesserungen, der im unabhängigen Patentanspruch 1 angegebenen Aktuatorik und der im unabhängigen Patentanspruch 8 angegebenen Vorrichtung bzw. des im unabhängigen Patentanspruch 13 angegebenen Verfahrens möglich.

Besonders vorteilhaft ist, dass nur ein als einteiliger Aktuator, vorzugsweise als Ringanker, ausgeführtes bewegliches Verstellelement vorgesehen ist, welcher in einem Freiraum axial entlang einer ersten Bewegungsachse zwischen zwei Endlagen verschiebbar angeordnet ist.

In vorteilhafter Ausgestaltung der Erfindung ist die Initialkonfiguration der Vorrichtung derart ausgeführt, dass eine maximale plastische Verformung des Deformationselements vorgesehen ist und alle Verformungselemente gehalten werden. D.h. in der Initialkonfiguration, also einer Anfangsstellung, ist immer vorgesehen, dass die erfindungsgemäße Vorrichtung bzw. das Verfahren auf einen schweren Crash ausgelegt ist und damit eine maximale plastische Verformung des Deformationselements vorsieht. Durch das Steuersignal ist es möglich, Verformungselemente freizugeben und somit die plastische Verformung zu reduzieren. Damit ist ein maximaler Selbstschutz für das eigene Fahrzeug erreicht. Die Initialkonfiguration der Vorrichtung kann beispielsweise dadurch erreicht werden, dass der ringförmige Aktuator bei unbestromten Spulen durch Halte- und/oder Rückstellmittel in der Mittelstellung gehalten bzw. in die Mittelstellung zurückgeführt wird. Die Außenkonturen der Verformungselemente und die Innenkontur des Aktuators sind so aufeinander abgestimmt, dass der Aktuator in der Mittelstellung alle beweglichen Verformungselemente hält. So kann der einteilige Aktuator beispielsweise so breit ausgeführt werden, dass in der Mittelstellung alle beweglichen Verformungselemente zumindest teilweise überdeckt und gehalten werden. Dadurch kann in der Mittelstellung keines der Verformungselemente brechen und radial auseinander gehen. Somit entspricht die Initialkonfiguration einer unbestromten Ruheposition, in welcher die Aktuatorik nicht durch ein Steuersignal betätigt wird und in welcher gleichzeitig bei einem Crashfall die maximale plastische Verformung des Deformationselements bzw. die höchste Steifigkeit der Crashbox vorgegeben ist. Auch andere Möglichkeiten können vorgesehen sein, dass in der Mittelstellung standardmäßig alle beweglichen Verformungselemente gehalten werden und so im Crashfall eine maximale plastische Verformung des Deformationselements erreicht wird. Die maximale plastische Verformung wird durch das Verformungselement erreicht, welches die Öffnung mit dem kleinsten Durchmesser aufweist. Dadurch, dass die plastische Verformung jedoch schrittweise durchführt wird, indem zwischen dem Verformungselement mit dem größten Öffnungsdurchmesser und dem Verformungselement mit dem kleinsten Öffnungsdurchmesser üblicherweise noch weitere Verformungselemente angeordnet sind, deren Öffnungsdurchmesser zwischen dem größten und kleinsten Durchmesser liegen, wird ein Übergang erreicht, ohne einen Kraftstoß zu erzeugen.

In vorteilhafter Ausgestaltung der Erfindung umfassen die Halte- und/oder Rückstellmittel mindestens eine Federanordnung mit mindestens einem Federelement und/oder eine Permanentmagnetanordnung mit mindestens einem Permanentmagneten. Um eine verbesserte Zentrierung des Aktuators zu erreichen und ein Verkanten des Aktuators zu verhindern, können mehrere Halte- und/oder Rückstellmittel verteilt am Umfang des Aktuators angeordnet werden. Die mittlere Ruhestellung des Aktuators kann beispielsweise durch Federpakete umgesetzt werden. Die Federn der Federpakete können gleichmäßig am Umfang des festen Verformungselements und der axialen Abstützung verteilt werden, wobei jeweils eine Feder des jeweiligen Federpakets zwischen dem Aktuator und dem festen Verformungselement und jeweils eine Feder des jeweiligen Federpakets zwischen dem Aktuator und der axialen Abstützung angeordnet ist. Vorzugsweise sind jeweils drei Federn mit einem Abstand von jeweils ungefähr 120° zueinander am Umfang des festen Verformungselements und der axialen Abstützung angeordnet. Die exakte Mittelposition des Aktuators kann beispielsweise über einen Rastmechanismus realisiert werden. Der Rastmechanismus umfasst beispielsweis im Aktuator und im Vorrichtungsgehäuse jeweils mindestens einen Permanentmagnet, welcher die fest definierte mittlere Position des Aktuators in der Ruhestellung erlaubt, da keine der Spulen der Spuleneinheit zu diesem Zeitpunkt bestromt ist. Mindestens zwei weitere gleichmäßig am Umfang des Aktuators verteilte Permanentmagnete bieten weitere Vorteile bezüglich der Zentrierung des Aktuators. Als Alternative zur Zentrierung durch Permanentmagnete können auch eine oder mehrere Federn mit Kugeln verwendet werden. Diese befinden sich radial außerhalb des Aktuators im Gehäuse und im Aktuator ist beispielsweise eine radial umlaufende Kerbe eingebracht, in welche die Kugeln abgestützt durch Federkraft einrasten.

In weiterer vorteilhafter Ausgestaltung der Erfindung ist die Aktuatorik nach dem Prinzip eines Linearmotors ausgeführt. Bei einer möglichen Ausführung als Linearmotor umfasst die Aktuatorik beispielsweise mindestens zwei Spulen und mindestens einen Permanentmagneten, wobei die mindestens zwei Spulen so bestromt werden können, dass der Aktuator in Abhängigkeit vom Steuersignal von der Mittelposition axial in beide Richtungen verschoben werden kann. Die Ausführung als Linearmotor ermöglicht eine schnelle und genaue Aktuatorik für den adaptiven Abbau von Crashenergie und die Einstellung der Steifigkeit einer veränderbaren Crashstruktur durch die Anpassung der erzielbaren Verjüngung des Deformationselements und weist insbesondere in Bezug auf die Dynamik des Aktuators bei höheren Stellwegen Vorteile auf. Hierbei können die Spulen beispielsweise im Gehäuse der Vorrichtung und der mindestens eine Permanentmagnet im Aktuator angeordnet werden. Das bedeutet, dass der Permanentmagnet von den fest stehenden Spulen bewegt wird. Alternativ kann das Prinzip auch umgedreht werden. Die Spulen werden so bestromt, dass der im Aktuator angebrachte Permanentmagnet eindeutig positioniert und verschoben werden kann. Um den Aktuator zu verschieben, werden die Spulen um 120° phasenverschoben mit Strom gespeist, so dass ein wanderndes Magnetfeld entsteht, das den Aktuator axial bewegt. Dies entspricht dem Prinzip eines Synchronmotors. In die Ausgangslage kann der Aktuator beispielsweise durch eine entsprechende Bestromung der Spulen gebracht werden. Dort wird er beispielsweise durch einen im Gehäuse angeordneten weiteren Dauermagneten gehalten bis er wieder durch Bestromung der Spulen verfahren wird. Generell sind auch andere Arten von Linearmotoren wie Asynchronmotor oder Reluktanzmotoren denkbar, welche dann auch ohne Permanentmagnet auskommen können.

In vorteilhafter Ausgestaltung der Erfindung weisen die beweglichen Verformungselemente jeweils wenigstens eine Sollbruchstelle auf, welche durch die erste Bewegung des Deformationselements gebrochen wird, wenn der Aktuator bezüglich des korrespondierenden Verformungselements keine Halteposition einnimmt. Das Verformungselement mit der größten Öffnung ist unbeweglich im Gehäuse der Vorrichtung festgelegt und ohne Sollbruchstelle ausgeführt. Die Sollbruchstellen der anderen Verformungselemente werden ohne das Halten gebrochen, so dass die Verformungselemente bzw. deren Restsegmente durch das Deformationselement radial zur Seite weggeschoben werden und nicht zur plastischen Verformung beitragen. Es ist jedoch erfindungswesentlich, dass jedes Verformungselement individuell angesteuert werden kann, ohne dass Verformungselemente gehalten werden, die einen kleineren Durchmesser haben. Üblicherweise wird jedoch das erste Verformungselement, wie oben angegeben, fest eingebaut, so dass dieses durch die Aktuatorik gar nicht gehalten werden kann oder muss. Das erste Verformungselement kann beispielsweise fest mit dem Gehäuse der Vorrichtung verbunden oder als Teil des Gehäuses ausgeführt werden. Zudem sind weitere Mittel zu axialen Abstützung der beweglichen Verformungselemente vorgesehen, die ebenfalls fest mit dem Gehäuse der Vorrichtung verbunden oder als Teil des Gehäuses ausgeführt werden können. Die Sollbruchstellen in den Verformungselementen können beispielsweise per Laser- oder Wasserstrahlverfahren realisiert werden. Dies erlaubt eine einfache Fertigung und eine bessere Handhabung der Verformungselemente, da sie sich selbst zentrieren können.

Ausführungsbeispiele der Erfindung sind in den Zeichnungen dargestellt und werden in der nachfolgenden Beschreibung näher erläutert.

### Kurze Beschreibung der Zeichnungen

Fig. 1 zeigt ein schematisches Blockdiagramm eines Ausführungsbeispiels eines adaptiven Crashboxsystems für ein Kraftfahrzeug.
Fig. 2 zeigt eine schematische Schnittdarstellung einer Crashbox mit einem Ausführungsbeispiel einer erfindungsgemäßen Vorrichtung zum adaptiven Abbau von Crashenergie in einer Initialkonfiguration.
Fig. 3 zeigt eine schematische Schnittdarstellung eines Details des Ausführungsbeispiels der erfindungsgemäßen Vorrichtung zum adaptiven Abbau von Crashenergie aus Fig. 3 in der Initialkonfiguration.
Fig. 4 zeigt eine schematische Schnittdarstellung eines Details des Ausführungsbeispiels der erfindungsgemäßen Vorrichtung zum adaptiven Abbau von Crashenergie aus Fig. 3 in einer ersten Endlagenkonfiguration.
Fig. 5 zeigt eine schematische Schnittdarstellung eines Details des Ausführungsbeispiels der erfindungsgemäßen Vorrichtung zum adaptiven Abbau von Crashenergie aus Fig. 3 in einer zweiten Endlangenkonfiguration.
Fig. 6 zeigt eine schematische Schnittdarstellung eines Details eines weiteren Ausführungsbeispiels der erfindungsgemäßen Vorrichtung zum adaptiven Abbau von Crashenergie in einer Initialkonfiguration.
Fig. 7 zeigt eine schematische Schnittdarstellung eines Details noch eines weiteren Ausführungsbeispiels der erfindungsgemäßen Vorrichtung zum adaptiven Abbau von Crashenergie in einer Initialkonfiguration.
Fig. 8 zeigt ein Kraftwegdiagramm mit möglichen Kraftniveaus über dem Verlauf einer Deformation eines Deformationselements der erfindungsgemäßen Vorrichtung zum adaptiven Abbau von Crashenergie.

### Ausführungsformen der Erfindung

Im Zuge der Entwicklungen der passiven Sicherheit bei Kraftfahrzeugen steht zunächst der Selbstschutz im Vordergrund. Dies ist die Eigenschaft des Kraftfahrzeugs seine eigenen Insassen sowohl in Fahrzeug-Fahrzeug-Kollisionen als auch in Kollisionen mit anderen Objekten zu schützen. Hierfür werden unter anderem beispielsweise Crashboxen eingesetzt. Derartige Crashboxen für Kraftfahrzeuge sind auf dem Markt bekannt und üblicherweise zur Anordnung zwischen einem Stoßfängersystem und der Karosserie des Kraftfahrzeugs vorgesehen. Durch die Crashbox soll im Crashfall bei einem Aufprall des Kraftfahrzeugs Energie absorbiert werden, um Teile des Kraftfahrzeugs und die Insassen des Kraftfahrzeugs zu schützen. In der Regel ist die Crashbox derart ausgestaltet, dass diese bei einem Aufprall mit sehr geringer Geschwindigkeit des Kraftfahrzeugs nur reversibel verformt wird, so dass hierbei keinerlei Schäden am Kraftfahrzeug auftreten. Bei einem Aufprall mit geringfügig höherer Geschwindigkeit nimmt die Crashbox in vorteilhafter Weise so viel Energie auf, dass nur das Stoßfängersystem beschädigt wird, nicht jedoch die übrige Karosserie des Kraftfahrzeugs. Zunehmend rücken bei der Entwicklung von Crashboxen außer dem Insassenschutz jedoch noch Themen bezüglich Partnerschutz und Crashkompatibilität in den Vordergrund. Partnerschutz ist die Eigenschaft des Kraftfahrzeugs die Insassen des gegnerischen Fahrzeugs in einer Fahrzeug-Fahrzeug-Kollision zu schützen, also eine möglichst geringe Aggressivität zu haben.

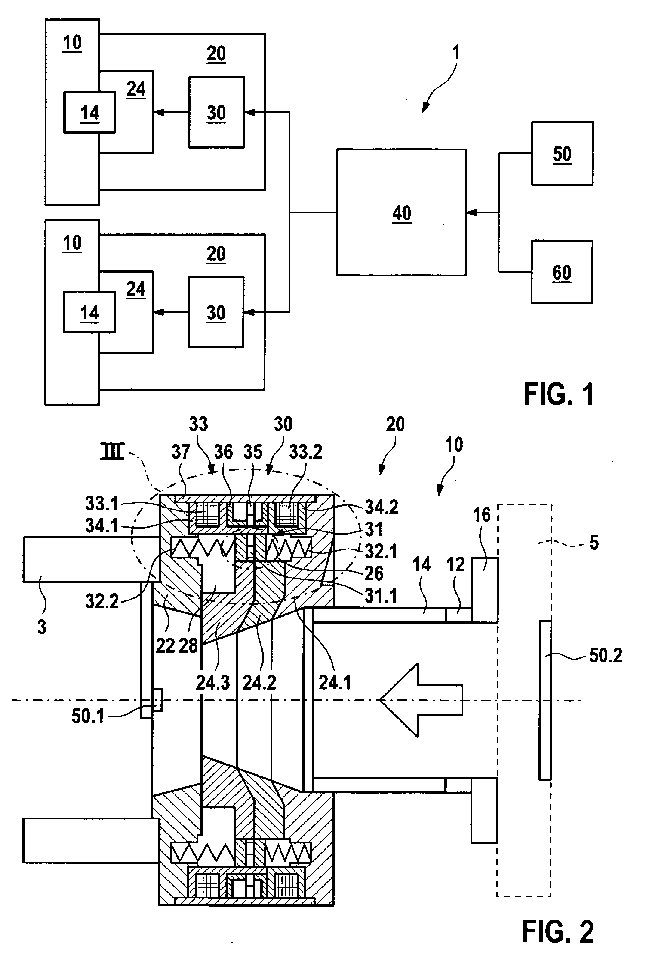

Fig. 1 zeigt ein schematisches Blockdiagramm eines Crashboxsystems 1 eines Kraftfahrzeugs 1 mit zwei Crashboxen 10, deren Steifigkeit jeweils durch eine erfindungsgemäße Vorrichtung 20 zum adaptiven Abbau von Crashenergie einstellbar ist. Die Vorrichtungen 20 zum adaptiven Abbau von Crashenergie umfassen jeweils ein Deformationselement 14, eine Aktuatorik 30 und eine Verformungseinheit 24. Wie aus Fig. 1 ersichtlich umfasst das Crashboxsystem 1 mehrere Sensorsysteme 50, 60 zur Erkennung eines Crash und zur Ermittlung der Crashschwere, eine Auswerte- und/oder Steuereinheit 40 zur Auswertung von Signalen der Sensorsysteme 50, 60 und zur Erzeugung von Steuersignalen zur Ansteuerung von Aktuatoren 30, über welche eine plastische Verformung des jeweiligen Deformationselements 14 der korrespondierenden Crashbox 10 unter Verwendung von Verformungseinheiten 24 eingestellt werden kann. Das dargestellte Crashboxsystem 1 ist im Fahrzeug zwischen einem nicht dargestellten Stoßfängersystem und der Karosserie des Kraftfahrzeugs angeordnet.

Fig.2 bis 5 zeigen ein erstes Ausführungsbeispiel der erfindungsgemäßen Vorrichtung 20 zum adaptiven Abbau von Crashenergie mit dem Deformationselement 14, das axial in Fahrzeuglängsrichtung ausgerichtet ist. Das bedeutet, dass eine durch einen Frontalaufprall verursachte Crashkraft das Deformationselement 14 in Längsrichtung oder axial in die durch einen Pfeil dargestellte Richtung in die Verformungseinheit 24 drückt, welche drei als Matrizenplatten 24.1, 24.2, 24.3 ausgeführte Verformungselemente aufweist. Die drei Matrizenplatten 24.1, 24.2, 24.3 weisen jeweils eine Öffnung auf, durch welche das Deformationselement 14 zur Erzielung der plastischen Verformung durch eine Verjüngung getrieben wird. Selbstverständlich kann der Fachmann auch andere bekannte Verfahren anwenden, die eine plastische Verformung des Deformationselements 14 bewirken können. Vorher muss jedoch ein elastisches Element 12 komprimiert werden, um leichte Stöße wie leichte Parkrempler, usw. auszufiltern. Dies reduziert den Reparaturaufwand für ein Fahrzeug, das von der erfindungsgemäßen Vorrichtung Gebrauch macht. Das elastische Element 12 ist daher üblicherweise aus einem elastischen Material gefertigt, das komprimierbar ist. Vorzugsweise können Materialien wie Gummi oder ein entsprechender Kunststoff mit den gewünschten Eigenschaften verwendet werden. Das elastische Element 12 kann auch als wenigstens ein Federelement ausführt werden, das beispielsweise aus Metall gefertigt ist. Ist das Deformationselement 14 beispielsweise als Zylinder ausgeführt, so trifft das auch für das elastische Element 12 zu, das dabei als Ring ausgebildet ist. Alternativ kann das elastische Element 12 auch im Querträger 5 außerhalb der Crashbox 10 untergebracht werden.

Das Deformationselement 14 wird zunächst durch eine erste Matrizenplatte 24.1 mit einem ersten Öffnungsdurchmesser verjüngt, die über das Gehäuse 37 abgestützt wird. Die erste Matrizenplatte 24.1 ist fest und führt im Crashfall immer zu einer Verjüngung des Deformationselements 14. Wie die anderen Matrizenplatten 24.2, 24.3 ist auch die erste Matrizenplatte 24.1 aus einem härteren Material als das Deformationselement 14 aufgebaut, so dass eine Verjüngung des Deformationselements 14 überhaupt möglich wird. Andernfalls würde die Matrizenplatte 24.1 verformt werden. Die Abstützung über das Gehäuse 37 führt dazu, dass die aufgebrachte Crashkraft über das Gehäuse 37 und dann an einen Längsträger 3 der Fahrzeugkarosserie abgeleitet wird. Durch die plastische Verformung des Deformationselements 14 wird jedoch bereits über die erste Matrizenplatte 24.1 Crashenergie abgebaut.

Da das elastische Element 12 wie einer Art Rauschschwelle für Crashvorgange wirkt, d.h. erst ab einer bestimmten Stärke der Crashvorgänge wird das elastische Element 12 soweit komprimiert, dass keine weitere Komprimierung mehr möglich ist, und damit das Deformationselement 14 in Richtung auf die Matrizenplatten 24.1, 24.2 und 24.3 bewegt wird, so dass das Deformationselement 14 nach dem Überschreiten dieser Rauschschwelle immer durch die erste Matrizenplatte 24.1 plastisch deformiert wird. Die weiteren Matrizenplatten 24.2 und 24.3 können je nach Bedarf durch die Aktuatorik 30 gehalten werden und so zu einer weiteren Verjüngung führen. Mit der zweiten und dritten Matrizenplatte 24.2 bzw. 24.3 erfolgt demnach die Adaption auf den Crashvorgang. D.h. je stärker der Crashvorgang, umso mehr Matrizenplatten 24.1, 24.2, 24.3 werden zur Verjüngung des Deformationselements 14 verwendet. Vorliegend sind in Fig. 1 lediglich drei Matrizenplatten 24.1, 24.2, 24.3 dargestellt. Es ist jedoch möglich, dies weiter zu verfeinern, in dem mehr als drei Matrizenplatten verwendet werden. Die Erfindung ermöglicht eine beliebige Anzahl von solchen Matrizenplatten 24.1, 24.2, 24.3 anzusteuern. Erfindungsgemäß umfasst die Aktuatorik 30, welche in Abhängigkeit von einem Steuersignal die Verjüngung für den adaptiven Abbau der Crashenergie einstellt, einen, beispielsweise als Ringanker ausgeführten Aktuator 31, welcher in der Achse der ersten Bewegungsrichtung so in einem Freiraum 26 zwischen zwei Endlagen axial verschiebbar angeordnet ist, dass der Aktuator 31 in Abhängigkeit von der aktuellen Verschiebeposition den Außenumfang von einem korrespondierenden beweglichen Verformungselement 24.2, 24.3 in mindestens einer Halteposition zumindest teilweise haltend überdeckt und in mindestens einer Freigabeposition freigibt, wobei eine Spuleneinheit 33 zum Verschieben des Aktuators 31 mehrere Spulen 33.1, 33.2 umfasst, welche in Abhängigkeit vom Steuersignal bestromt werden und durch entsprechende Spulenhalterungen 34.1, 34.2 im Gehäuse 37 gehalten werden.

Somit besteht der Kern der Erfindung darin, die Anpassung der Steifigkeit der Crashstruktur durch den Aktuator 31 zu realisieren. Der Aktuator 31 wird in einem dreistelliger Hubmagneten mit zwei Spulen 33.1, 33.2 gehalten, wobei eine mittlere Ruhestellung der unbestromten Initialkonfiguration durch Federpakete vorgegeben wird. Im dargestellten Ausführungsbeispiel werden drei Federpakete verwendet, die jeweils zwei Federelemente 32.1, 32.2 umfassen und vorzugsweise jeweils in einem Abstand von ungefähr 120° gleichmäßig am Umfang der festen ersten Matrizenplatte 24.1 und einer axialen Abstützung 22 verteilt sind. Alternativ sind auch andere Ausführungsformen der Federpakete denkbar, wie beispielsweise eine große Spiralfeder, deren Innendurchmesser in etwa dem mittleren Durchmesser des Aktuators entspricht. Die exakte Mittelposition des Aktuators 31 wird über einen Rastmechanismus, wie z.B. durch Magnete oder durch über eine Feder vorgespannte Kugel in einer Kerbe realisiert.

Durch die Verwendung des einteiligen Aktuators 31, der hier beispielshaft als Ringanker ausgeführt ist, kommen nicht nur die Kostenvorteile zur Geltung, die aus der kleineren Anzahl der Aktuatoren 31 resultieren, sondern auch die Kostenvorteile, die sich aufgrund des deutlich einfacheren Aufbaus des Gesamtsystems ergeben. Die Überwachung von mehreren Aktuatoren ist in der Regel aufwändig und entfällt in vorteilhafter Weise bei der dargestellten Ausführungsformen der vorliegenden Erfindung, die nur einen einzigen Aktuator 31 aufweist. Ebenso ergeben sich in vorteilhafter Weise keine Synchronisierungsfehler und relative Steuerungen sind nicht erforderlich. Der Hauptvorteil des erfindungsgemäßen Aktuator 31 ergibt sich jedoch durch eine Reduktion der Schaltzeit von bis zu 50% bei einer mehr als zweistufigen Ausführung der Aktuatorik 30.

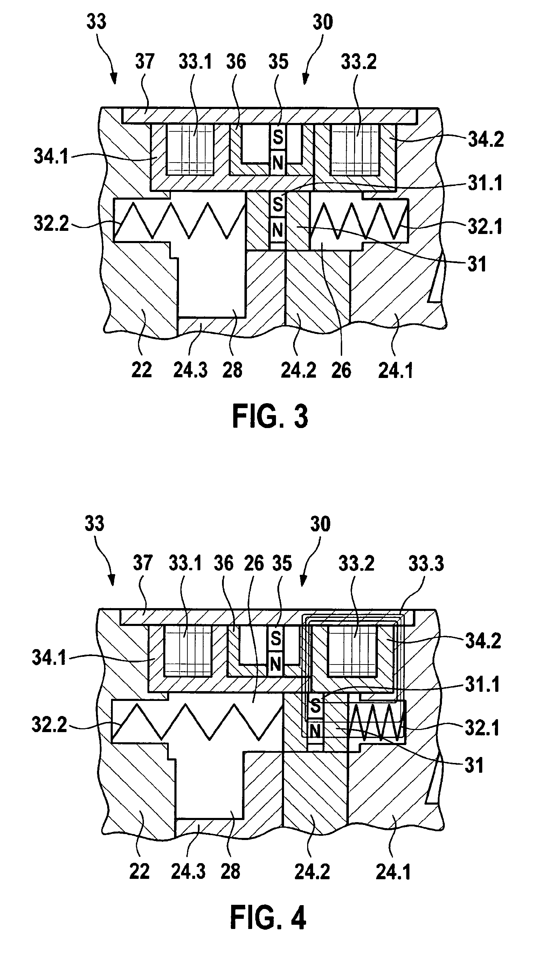

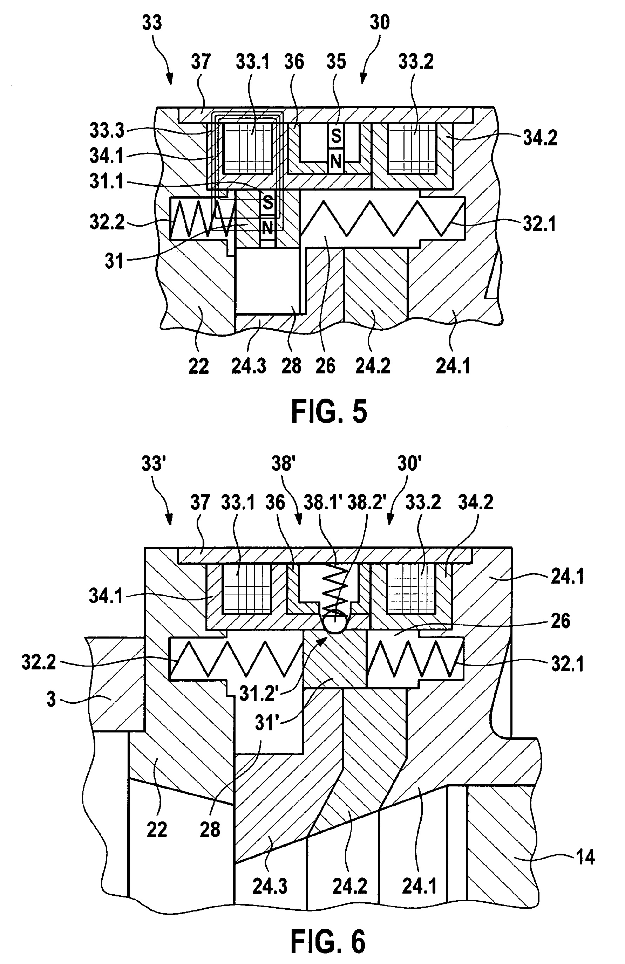

Der erfindungsgemäße Aktuator 31 ist so gestaltet, dass egal welche Steifigkeit angefordert ist, er maximal nur den halben Weg des Freiraums 26 fahren muss. So ist für eine Bewegung des Aktuators 31 aus der Mittelposition nach rechts in eine in Fig. 4 dargestellte rechte Endlage zur Einstellung einer mittleren Steifigkeit nur ein Weg erforderlich, welcher nur etwa 2/3 der Breite des Aktuators 31 entspricht. Für eine Bewegung des Aktuators 31 aus der Mittelposition nach links in eine in Fig. 5 dargestellte linke Endlage zur Einstellung einer minimalen Steifigkeit ist nur ein Weg erforderlich, welcher etwa der vollen Breite des Aktuators 31 entspricht. Dies entspricht gegenüber einer Initialkonfiguration des Aktuators 31 in der linken oder rechten Endlage einer Reduktion der Schaltzeit um 50%.

In der in Fig. 3 dargestellten Mittelstellung des Aktuators 31 kann keine der Matrizenplatten 24.1, 24.2, 24.3 brechen und radial auseinander gehen, dies verhindert der Aktuator 31. Dies ist die unbestromte Ruheposition des Aktuators 30 und somit auch die Position, in der die höchste Steifigkeit und die größte Verjüngung des Deformationselements 14 gegeben sind.

Wie aus Fig. 2 bis 5 weiter ersichtlich ist, befinden sich im Aktuator 31 und im Gehäuse 37 jeweils ein Permanentmagnet 31.1, 35, welche die fest definierte mittlere Position in der Ruhestellung vorgeben, da zu diesem Zeitpunkt keine der Spulen 33.1, 33.2 bestromt ist. Im Gehäuse 37 ist der Permanentmagnet 35 in einem ferromagnetischen Ring 36 angeordnet. Mindestens zwei weitere gleichmäßig am Umfang des Aktuators 31 verteilte Permanentmagnete ermöglichen eine Zentrierung des Aktuators 31. Der Aktuator 31 kann auch hohl gestaltet sein, dies bietet einen Gewichtsvorteil. Alternativ kann auch im "leeren" Innenraum des Aktuators 31 ein magnetisch leitender Kunststoff eingesetzt werden, dies verbessert die magnetische Leitfähigkeit gegenüber einem hohlen Anker.

Wie aus Fig. 4 weiter ersichtlich ist, hat die Auswerte- und/oder Steuereinheit 40 die rechte Spule 33.2 bestromt, was durch dargestellte Magnetfeldlinien 33.3 repräsentiert wird. Dies bewirkt eine Bewegung des Aktuators 31 nach rechts in die rechte Endlage. Hierbei arbeitet der Aktuator 31 gegen die Kraft des rechten Federelements 32.1, wird aber vom linken Federelement 32.2 unterstützt, so dass im Endeffekt nicht so viel Federkraft bewältigt werden muss. In der dargestellten Position ist die linke Matrizenplatte 24.3 nicht mehr radial unterstützt. Daher brechen die Sollbruchstellen dieser linken Matrizenplatte 24.3 beim Eindringen des Deformationselementes 14 und die Segmente der Matrizenplatte 24.3 können nach außen in den Freiraum 26 gedrückt werden. Der Aktuator 31 unterstützt nur die mittlere Matrizenplatte 24.2 radial, so dass nur die rechte Matrizenplatte 24.1 und die mittlere Matrizenplatte 24.2 das Deformationselement verjüngen. Daher ist die Struktur auf eine "mittlere Steifigkeit" eingestellt.

Wie aus Fig. 5 weiter ersichtlich ist, hat die Auswerte- und/oder Steuereinheit 40 die linke Spule 33.1 bestromt, was durch dargestellte Magnetfeldlinien 33.3 repräsentiert wird. Dies bewirkt eine Bewegung des Aktuators 31 nach links in die linke Endlage. Hierbei arbeitet der Aktuator 31 gegen die Kraft des linken Federelements 32.1, wird aber vom rechten Federelement 32.2 unterstützt, so dass im Endeffekt nicht so viel Federkraft bewältigt werden muss. In dieser Position sind weder die linke Matrizenplatte 24.3 noch die mittlere Matrizenplatte 24.2 vom Aktuator 31 radial unterstützt. Daher werden die Sollbruchstellen der linken und mittleren Matrizenplatte 24.3, 24.2 beim Eindringen des Deformationselementes 14 brechen und die Segmente der Platten können nach außen gedrückt werden. Durch die spezielle Konstruktion der linken Matrizenplatte 24.3 mit einer Aussparung 28 können die Segmente der linken Matrizenplatte 24.3 trotz des Vorhandenseins des Aktuators 31 nach außen geschoben werden. Der Aktuator 31 unterstützt in dieser Stellung keine der beiden beweglichen Matrizenplatten 24.2, 24.3, nur die feste rechte Matrizenplatte 24.1 verjüngt das Deformationselement 14. Somit ist die Struktur auf eine "minimale Steifigkeit" eingestellt.

Wie aus Fig. 6 ersichtlich ist, können als Alternative zu Permanentmagneten 33.1, 35 in einer Aktuatorik 30' auch ein oder mehrere Federsysteme 38'zur Umsetzung des Rastmechanismus verwendet werden, die jeweils eine Feder 38.1' und eine Kugel 38.2' aufweisen. Diese befinden sich radial außerhalb des Aktuators 31' im Gehäuse 37 und im Aktuator 31' befindet sich beispielsweise eine radial umlaufende Kerbe 31.2', in welche die Kugel 38.2' durch die Federkraft einrastet. Als weitere Alternative für einen Rastmechanismus kann auch eine Blechbiegefeder mit einer aufgeprägten Nase verwendet werden, welche direkt ohne Kugel auf die Kerbe wirkt.

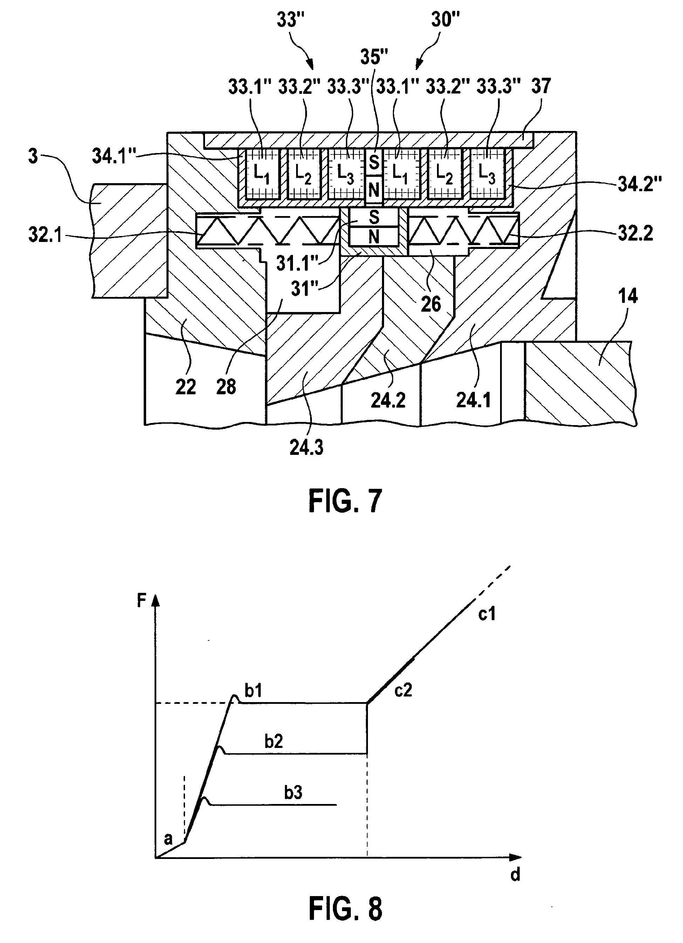

Wie aus Fig. 7 ersichtlich ist, kann die Aktuatorik 30" nach dem Prinzip eines Linearmotors arbeiten. Dies hat Vorteile in Bezug auf die Dynamik des Aktuators 31 " bei höheren Stellwegen. Die Spulen 33.1 ", 33.2", 33.3" (L1 bis L3) der Spuleneinheit 33" werden so bestromt, dass der im Aktuator 31" angeordnete Permanentmagnet 31.1" eindeutig positioniert und verschoben werden kann. Um den Aktuator 31 " zu verschieben, werden die Spulen 33.1 ", 33.2", 33.3" um 120° phasenverschoben mit Strom gespeist, so dass ein wanderndes Magnetfeld entsteht, das den Aktuator 31" axial bewegt (Prinzip des Synchronmotors). Hier sind die Spulen 33.1 ", 33.2", 33.3" im Gehäuse 37 in korrespondierenden Spulenhalterungen 34.1 ", 34.2" angeordnet. In die dargestellte Ausgangslage wird der Aktuator 31 " beispielsweise durch entsprechende Bestromung der Spulen 33.1 ", 33.2", 33.3" gebracht. Dort wird der Aktuator 31" durch den im Gehäuse 37 angeordneten Permanentmagnet 35" gehalten bis der Aktuator 31 " wieder durch eine entsprechende Bestromung der Spulen 33.1 ", 33.2", 33.3" verfahren wird. Dafür sind die die Federelemente 32.1, 32.2 zunächst nicht erforderlich, sie können aber unterstützend wirken. Alternativ können beim Verfahren in die Ausgangsposition und beim Halten in der Ausgangsposition die Federelemente 32.1, 32.2 unterstützend wirken. Zudem kann die Anzahl der Spulen auch von drei auf zwei reduziert werden, und das Prinzip einer Tauchspule mit zwei Spulen umgesetzt werden. Im dargestellten Ausführungsbeispiel wird der Permanentmagnet 33.1 " von den fest stehenden Spulen 33.1 ", 33.2", 33.3" bewegt. Alternativ kann das Prinzip auch umgedreht werden. Generell sind auch andere Arten von Linearmotoren wie Asynchronmotor oder Reluktanzmotoren denkbar.

Die Aktuatorik 30, 30', 30" der dargestellten Ausführungsbeispiele reagiert auf ein nicht dargestelltes Steuersignal, das von außerhalb der erfindungsgemäßen Vorrichtung stammen kann, beispielsweise von einem Airbag-Steuergerät. Ein solches Steuergerät kann sich jedoch auch innerhalb der Vorrichtung selbst befinden, und damit das Steuersignal anhand von Sensorsignalen oder anderen Signalen von anderen Steuergeräten erzeugen. Neben einer Rundumsicht wie Video, Radar, Lidar, usw. können auch andere Precrash-Signale wie Bremssignale oder andere ESP-Signale oder Navigationsdaten verwendet werden, um den Crash besser charakterisieren zu können.

Im vorliegenden Beispiel ist in der Rotationsachse eine Sensorik 50 angeordnet, die beispielsweise einen Radarsensor 50.1 umfasst, der durch das Deformationselement 14 auf ein mögliches Aufprallobjekt schaut, und damit die Aufprallgeschwindigkeit bestimmen kann, und somit für das Steuersignal mit einer anschließenden Verarbeitung des Sensorsignals des Radarsensors 50.1 sorgt. Dieser Radarsensor 50.1 kann beispielsweise als Einchip-Radarsensor, Lidar, Ultraschallsensor, induktiver oder kapazitiver Sensor ausgeführt werden.

Die durch die Verjüngung abgebaute Energie hängt auch von der Materialwahl des Deformationselements 14 sowie von der Wandstärke und gegebenenfalls auch von einer Füllung des Deformationselements 14 ab. Die damit maximal abzubauende Energie kann so im Vorhinein je nach Fahrzeugtyp und Spezifikation festgelegt werden. Zur Ermittlung der einzustellenden Verjüngung ermittelt die Sensorik 50 über den Radar-Sensor 50.1 die Aufprallgeschwindigkeit, deren Änderung über die Zeit und den Intrusionsweg auf ein Aufprallobjekt. In Abhängigkeit von den ermittelten Werten erfolgt durch die Aktuatorik 30, 30', 30" die Einstellung der erforderlichen Verjüngung. Dies kann beispielsweise über eine Tabelle erfolgen, in der Aufprallgeschwindigkeiten einer bestimmten Verjüngung zugeordnet sind. Infolge des Crashs bewegt sich das Deformationselement 14 nachdem die Rauschschwelle, die durch das elastische Element 12 festgelegt ist, überschritten wurde in Richtung der Matrizenplatten 24.1, 24.2, 24.3. Durch die entsprechend eingestellte Verjüngung werden die entsprechenden beweglichen Matrizenplatten 24.2, 24.3 durch die Aktuatorik 30, 30', 30" bzw. den als Ringanker ausgeführten Aktuator31, 31', 31" gehalten, wodurch sich das Deformationselement 14 bei der Bewegung in Crashrichtung auf die Sensorik 50 verjüngt und dadurch Crashenergie durch plastische Verformung abbaut. Weitere Crashenergie wird über das Gehäuse 37 abgeleitet. Bei einem solchen Frontalcrash trifft das Aufprallobjekt zunächst auf die nicht dargestellte Stoßstange auf. Der Stoß bzw. Aufprall wird direkt zu einem Querträger 5 weitergeleitet. Der Querträger 5 trägt im Wesentlichen zur Fahrzeugstabilität und zur Crashsicherheit bei, er verbindet beide Längsträger 3 bzw. beide Crashstrukturen miteinander. Um die vom Radarsensor 50.1 ausgesandten Radarwellen besser reflektieren zu können, kann im Querträger 5 ein Reflektor 50.2 eingesetzt werden. Der Querträger 5 weist eine vorgegebene Dicke auf, danach folgt das Deformationselement 14 mit dem elastischen Element 12. Anschließend folgen die feststehende Matrizenplatte 24.1 und die beweglichen Matrizenplatten 24.2, 24.3. In der in Fig. 2, 3, 6 und 7 dargestellten Initialkonfiguration ist der Aktuator 31, 31', 31" in der oben beschriebenen Mittelstellung zwischen den in Fig. 4 bzw. 5 dargestellten beiden Endlagen angeordnet. In der so genannten Initialkonfiguration ist die erfindungsgemäße Vorrichtung 20 so konfiguriert, dass eine maximale Verjüngung des Deformationselements 14 ermöglicht wird, und damit bei einem schweren Crash keine Veränderung durch die Aktuatorik 30, 30', 30" erforderlich ist. Diese Mittelstellung des Aktuators 31, 31', 31" kann beispielsweise durch entsprechende Dauermagnete 31.1, 31.1", 35, 35" bzw. durch Federsysteme 38' sichergestellt werden, gegen deren Kraftwirkung die Aktuatorik 30, 30', 30" arbeiten muss, um in die beiden Endlagen überzugehen.

In der in Fig. 4 dargestellten rechten Endlage hält der Aktuator 31 neben der festen Matrizenplatte 24.1 nur noch eine weitere Matrizenplatte 24.2, und in der in Fig. 5 dargestellten linken Endlage wird außer der festen Matrizenplatte 24.1 keine weitere Matrizenplatte vom Aktuator 31 gehalten, wobei die linke bewegliche Matrizenplatte 24.3 eine auf den Aktuator abgestimmte Aussparung 28 aufweist, um eine radiale Verschiebung der Segmente der beweglichen linken Matrizenplatte 24.3 zu ermöglichen. Über das Gehäuse 37 und die axiale Abstützung 22 sind die Matrizenplatten 24.1, 24.2, 24.3 abgestützt, wobei das Gehäuse 37 mit dem Längsträger 3 verbunden ist.

Die Sensorik 50 ermöglicht eine in die Vorrichtung 20 integrierte Geschwindigkeitsmessung und umfasst, vorzugsweise einen so genannten Ein-Chip-Radarsensor 50.1. Neben den geringen Kosten erfüllt ein solcher Radarsensor 50.1 auch die Anforderungen bezüglich Genauigkeit und Schnelligkeit. Der Radarsensor 50.1 kann hochgenau in einer Dimension, in diesem Fall axial, die Entfernungen und auch die Entfernungsänderung, also die Geschwindigkeit, mit einer sehr hohen Abtastrate bestimmen. Somit kann zu einem sehr frühen Zeitpunkt nach dem Aufprall die Geschwindigkeit ermittelt werden, mit der sich das Deformationselement 14 am Anfang verformt. Wie bereits erwähnt, sind auch andere Sensoren, wie kapazitive, induktive, Ultraschall- und Beschleunigungssensoren sowie ein Linearpotentiometer für diese Messung geeignet.

Vorzugsweise kann auch eine Precrash-Sensorik 60 das Steuersignal für die Einstellung der Verjüngung beeinflussen. Eine solche Precrash-Sensorik 60 umfasst beispielsweise eine Mono- oder Stereo-Video-Sensorik, ein Radar- oder Lidar-System und stellt ein Rundumsicht-Signal zur Verfügung, aus dem potentielle Crashvorgänge ermittel werden können. Bei der Verwendung der Precrash-Sensorik 60 kommt die Reversibilität der erfindungsgemäßen Vorrichtung zum Tragen. Da die Aktuatorik 30 reversibel angesteuert werden kann, kann sie zwanglos mit der eben erwähnten Precrash-Sensorik 60 kombiniert werden. Somit kann bereits vor dem Crash die adaptive Struktur, wenn nötig, eingestellt werden. Kommt es nicht zu einer Kollision, kann die Initialstellung wieder eingenommen werden. Ein weiterer Vorteil ist, dass die z. T. verwendeten so genannten Upfrontsensoren, das sind Beschleunigungssensoren an der Fahrzeugfront, entweder eingespart oder direkt in die Vorrichtung integriert werden können.

Die Hauptanforderung an die Aktuatorik 30 ist die hohe Geschwindigkeit. Die Aktuatorik 30 kann stufenlos arbeiten, jedoch ist eine Verstellung in mehreren Stufen vorteilhaft, da letztendlich an Schnelligkeit gewonnen wird. Ein Vorteil der erfindungsgemäßen Aktuatorik besteht in der Gewährleistung einer hohen Aktuatordynamik, da die Masse sowie die Reibung gering und die Schaltwege kurz sind. Diese kurzen Schaltwege können durch eine optimierte Formgebung der Matrizenplatten noch verkürzt werden, beispielsweise durch eine geringere Dicke am Außendurchmesser.

Im Folgenden ist die Funktionsweise der adaptiven Crashbox 10 beschrieben. Zunächst erkennt das Sensorsystem 50 einen Crash oder das Precrash-Sensorsystem 60 einen bevorstehenden Crash und kann in idealer Weise zwischen einem stehenden und einem fahrenden Objekt unterscheiden. Vorzugsweise kann das Sensorsystem 50, 60 auch die Größe des stehenden oder fahrenden Objektes feststellen. Danach beurteilt die Auswerte- und/oder Steuereinheit 40 die Stärke des Crashs und entscheidet über die erforderliche Steifigkeit bzw. Festigkeit der Crashbox 10 bzw. die erforderliche Verjüngung des Deformationselements 14, wobei die Auswerte- und/oder Steuereinheit 40 entweder als separates Steuergerät in der adaptiven Crashbox 10 oder als Teil eines Airbagsteuergeräts des Kraftfahrzeugs ausgeführt ist. Anschließend gibt die Auswerte- und/oder Steuereinheit 40 ein entsprechendes Steuersignal an die Aktuatorik 30, 30', 30" aus, welche den Aktuator 31, 31', 31" in die gewünschte Position bringt, um die erforderliche Verjüngung des Deformationselements 14 einzustellen. Daran anschließend beginnt die plastische Verformung der Crashbox 10.

Die Sensorsysteme 50, 60 sensieren Informationen über ein Fahrzeugumfeld, eine Crashschwere und/oder Fahrdynamikgrößen. Die Auswerte- und/oder Steuereinheit 40 empfängt die erfassten Informationen von den Sensorsystemen 50, 60 und wertet die empfangenen Informationen zur adaptiven Einstellung der Energieaufnahmefähigkeit des Deformationselements 14 aus, wobei die Auswerte- und/oder Steuereinheit 40 die ermittelte aktuelle Fahrsituation dahingehend auswertet, ob eine Positionsveränderung des verschiebbaren Aktuators 31, 31', 31" derAktuatorik 30, 30', 30" erforderlich ist oder nicht. Die empfangenen Informationen über Fahrdynamikgrößen in Verbindung mit den Informationen aus dem Fahrzeugumfeld und/oder dem Crashboxbereich ermöglichen der Auswerte- und/oder Steuereinheit 40 eine vorausschauende Ansteuerung der Aktuatorik 30, 30', 30".

Die Steuerung der Aktuatorik 30, 30', 30" kann in Abhängigkeit eines Signals von der Auswerte- und/oder Steuereinheit 40 erfolgen. Vorzugsweise wird die Auswerte- und/oder Steuereinheit 40 in Form eines Steuergeräts ausgeführt, das beispielsweise als Airbagsteuergerät ausgeführt ist, wobei auch andere Steuergeräte zur Ansteuerung denkbar sind. Vorzugsweise ist die Auswerte- und/oder Steuereinheit 40 als Teil des Airbagsteuergeräts ausgeführt, was einen Kostenvorteil nach sich zieht. Eine Ausführung der Auswerte- und/oder Steuereinheit 40 als separates Steuergerät, würde in vorteilhafter Weise eine höhere Modularität ermöglichen. Eine derartige separate Intelligenz wird derart platziert, dass diese bei einem Crash geschützt ist. Die Auswerte- und/oder Steuereinheit 40 sieht, wie oben bereits ausgeführt ist, die Erfassung von Informationen der Sensorsystems 50, 60 vor, d.h. die Auswerte- und/oder Steuereinheit 40 des Kraftfahrzeugs wertet zur adaptiven Ansteuerung der Aktuatorik 30, 30', 30" Daten der Sensorsysteme 50, 60 aus, welche Informationen über Fahrzeugumgebung und/oder Crashschwere umfassen. Durch einen Auswertealgorithmus wird ein entsprechendes Signal generiert, welches die Aktuatorik 30, 30', 30" in Abhängigkeit von den ermittelten Informationen ansteuert.

Vor und/oder während des Crashs bzw. der Kollision sensieren die Sensorsysteme 50, 60 Informationen über das Fahrzeugumfeld, den Aufprall und/oder die Fahrdynamikgrößen und sendet diese zur Erzeugung der Ansteuersignale an die Auswerte- und/oder Steuereinheit 40 zur Ansteuerung der Aktuatorik 30, 30', 30" der Crashbox 10. Die Auswerte- und/oder Steuereinheit 40 erzeugt die entsprechenden Steuersignale und überträgt diese an die Aktuatorik 30, 30', 30". Die Steuersignale bewirken, dass die Aktuatorik 30, 30', 30" ein Stellsignal für den Aktuator 31, 31', 31" zur Einstellung der Verjüngung des Deformationselements 14 generiert.

Vorzugsweise ist der Aktuator 31, 31', 31" vor und/oder während des Crashfalls aktivierbar. Wird durch die Auswerte- und/oder Steuereinheit 40 ein Aufprall erkannt, so verstellt die Aktuatorik 30, 30', 30" den Aktuator 31, 31', 31", wobei die Verjüngung des Deformationselements 14 vorzugsweise in Abhängigkeit eines erkannten Objekts, der Relativgeschwindigkeit des Fahrzeugs und/oder des Crashtyps gezielt von der Aktuatorik 30, 30', 30" eingestellt werden kann. Die adaptive Crashbox 10 ist derart ausgeführt, dass im Falle eines Fehlers immer auf die maximale Verjüngung des Deformationselements 14 und somit auf den maximalen Selbstschutz zurückgegriffen werden kann. Vorzugsweise ist die Ansteuerung des Aktuators 31, 31', 31" während eines Crashvorgangs und insbesondere während eines Mehrfachcrashvorgangs gezielt regelbar und/oder konstant eingestellt.

Wie oben angegeben, ist in der Initialkonfiguration die Aktuatorik 30, 30', 30" unbestromt und der Aktuator 31, 31', 31" befindet sich daher in der in Fig. 2, 3, 6 oder 7 dargestellten Mittelposition. In einem Worst Case Szenario beispielsweise bei defekter Aktuatorik 30, 30', 30" würde die adaptive Struktur auf der maximalen Steifigkeit bleiben, d.h. eine maximale Verjüngung bewirken, und somit den Selbstschutz hervorheben. Die Zeit, die dieser Vorrichtung zur Verfügung steht, um von der Stellung maximaler Steifigkeit, d.h. maximale Verjüngung auf eine andere Stellung zu gehen, setzt sich aus verschiedenen Deformationswegen zusammen, welche den resultierenden Weg aus der Deformation des Querträgers 5, d.h. der Reflektor 50.2 kommt dem Radarsensor 50.1 ein Stück näher, den resultierenden Weg aus der Deformation des elastischen Elements 12, den Weg, welchen das Deformationselement 14 zurücklegt, bis der kleinste Durchmesser der ersten Matrizenplatte 24.1 erreicht ist. Erst ab hier startet die Verjüngung des Deformationselements 14 durch die Matrizenplatte 24.2, sofern diese nicht nach erfolgter Verstellung des Aktuators 31, 31', 31" durch die Aktuatorik 30, 30', 30" nach außen ausweichen kann. Damit kann festgehalten werden, dass die Reaktionszeit, welche der Aktuatorik 30, 30', 30" zur Verfügung steht, also die Stellzeit, die Rechenzeit der Auswerte- und/oder Steuereinheit 40 und die Erfassung und Bearbeitungszeit der Sensorik 50, um eine Steifigkeitsänderung der erfindungsgemäßen adaptiven Struktur durchzuführen, durch das Abfahren der verschiedenen Deformationswege bestimmt wird.

Im Folgenden wird die Funktionsweise der Struktur gemäß Figur 2 noch einmal erläutert. Als Option können zunächst Precrash-Sensoren der Precrash-Sensorik 60 eine bevorstehende Kollision erkennen und zwischen einem stehenden und einem fahrenden Objekt unterscheiden. Gegebenenfalls kann auch die Größe und die Masse des Aufprallobjekts festgestellt werden. Dann ist der Zeitpunkt gegeben zudem das Eigenfahrzeug Kontakt mit dem Hindernis, also mit dem Aufprallobjekt hat. Die Verformung des Vorderwagens im Bereich des Querträgers 5 beginnt. Der Querträger 5 verformt über einen Befestigungsflansch 16 das elastische Element 12 des Deformationselements 14. Alternativ kann das Deformationselement 14 ohne das elastische Element 12 direkt mit dem Querträger 5 verbunden sein. Das elastische Element 12 ist bei der alternativen nicht dargestellten Ausführungsform beispielsweise im oder am Querträger 5 angeordnet. Der interne Geschwindigkeitssensor 50.1 erfasst die Verformung, und zwar den Weg, die Geschwindigkeit und deren Änderung. Die Auswerte- und/oder Steuereinheit 40 beurteilt die Stärke des Unfalls und entscheidet über die erforderliche Festigkeit der Crashbox 10. Die Auswerte- und/oder Steuereinheit 40 ist wie oben angegeben, entweder Teil der Vorrichtung oder extern angeordnet. Die Auswerte- und/oder Steuereinheit 40 gibt ein entsprechendes Signal an die Aktuatorik 30, 30', 30" aus, um den Aktuator 31, 31', 31" "entsprechend einzustellen. Die plastische Verformung der Crashbox 10 beginnt und dafür gibt es drei unterschiedliche Szenarien:

### 1. Szenario

Die Auswerte- und/oder Steuereinheit 40 registriert einen schweren Unfall. Es muss die gesamte Steifigkeit der Crashbox 10 ausgenutzt werden. Es wird so viel Energie absorbiert bzw. umgewandelt wie möglich. Die Aktuatorik 30, 30', 30" befindet sich bereits in der Initialstellung, d.h. in der in Fig. 2, 3, 6 bzw. 7 dargestellten Mittelstellung des Aktuators 31, 31', 31", in welcher neben der festen Matrizenplatte 24.1 auch die beiden beweglichen Matrizenplatten 24.2, 24.3 vom Aktuator 31, 31', 31" gehalten werden und so zur Verjüngung des Deformationselements 14 beitragen. Dies bedeutet die kürzeste mögliche erforderliche Gesamtreaktionszeit, da der Aktuator nicht verstellt werden muss. Durch das Vorhandensein des Aktuators 31, 31', 31" können die Teile der beweglichen Matrizenplatten 24.2, 24.3 nicht nach außen weichen. Die Sollbruchstellen werden damit nicht gebrochen. Es wird die maximale Verjüngung stattfinden, das Deformationselement 14 muss durch alle Matrizenplatten 24.1, 24.2, 24.3 verformt werden. Die Verformung des Eigenfahrzeugs geht deutlich über die Crashbox 10 hinaus. Im Längsträger 3 wird weitere Energie absorbiert. Damit wird ein maximaler Selbstschutz erreicht.

### 2. Szenario

Die Auswerte- und/oder Steuereinheit 40 registriert einen mittelschweren Unfall. Die Steifigkeit der Crashbox 10 wird gezielt und zugunsten des Unfallgegners reduziert, um die Energie so optimal wie möglich abzubauen. Die Aktuatorik 30, 30', 30" fährt den Aktuator 31, 31', 31" in die in Fig. 4 dargestellte rechte Endlage, dadurch wird die linke Matrizenplatte 24.3 mit dem kleinsten Durchmesser am Umfang nicht mehr vom Aktuator 31, 31', 31" gehalten. Dies bedeutet eine kurze Reaktionszeit, da der Aktuator 31, 31', 31" nur ungefähr um 2/3 seiner Breite nach rechts verfahren wird, um die linke Matrizenplatte 24.3 freizugeben und die mittlere Matrizenplatte 24.2 weiter zu halten. Beim Ankommen des Deformationselements 14 werden die durch das Brechen der Sollbruchstelle entstandenen drei Segmente der linken Matrizenplatte 24.3 nach außen in den Freiraum 26 weggeschoben. Somit bewirkt die linke Matrizenplatte 24.3 keine Verjüngung des Deformationselements 14 und nimmt somit auch keine Energie mehr auf. Im Gegensatz dazu wird die mittlere Matrizenplatte 24.2 noch am Umfang vom Aktuator 31, 31', 31" gestützt. Somit kann die mittlere Matrizenplatte 24.2 nicht nach außen in den Freiraum 26 gedrückt werden, und verursacht dadurch eine Verjüngung des Deformationselements 14 und absorbiert somit Energie. Die erste Matrizenplatte 24.1 bewirkt aufgrund ihrer festen Anordnung in jedem Crashfall eine Verjüngung des Deformationselements 14. Dadurch werden die Crashbox 10 und ein Teil des Längsträgers 3 verformt, so dass eine gute Kompatibilität für einen Crash und einen Partnerschutz erreicht werden kann. Eine solche Einstellung ist auch für einen Seitencrash geeignet.

### 3. Szenario

Die Auswerte- und/oder Steuereinheit 40 registriert einen leichten Unfall. Dadurch fährt die Aktuatorik 30, 30', 30" den Aktuator 31, 31', 31" in die in Fig. 5 dargestellte linke Endlage. Dies bedeutet die längste Reaktionszeit, da der Aktuator 31, 31', 31" um seine gesamte Breite nach links gefahren wird, um die mittlere und linke Matrizenplatten 24.2, 24.3 frei zu geben. Die Reaktionszeit ist keinesfalls problematisch, denn wenn ein leichter Unfall sensiert wird, steht auch am meisten Zeit zur Verfügung, weil die Deformation langsam geschieht. In der linken Endlage wird weder die linke Matrizenplatte 24.3 mit dem kleinsten Durchmesser noch die mittlere Matrizenplatte 24.2 mit einem mittleren Öffnungsdurchmesser durch den Aktuator 31, 31 31" am Umfang gehalten. Daher werden beim Ankommen des Deformationselements 14 die Segmente der mittleren und der linken Matrizenplatte 24.2, 24.3 nach außen in den Freiraum 26 weggeschoben, denn die Sollbruchstellen der beiden Matrizenplatten 24.2, 24.3 reißen. Dadurch bewirken die beiden beweglichen Matrizenplatten 24.2, 24.3 keine Verjüngung des Deformationselements 14 und nehmen somit auch keine Energie mehr auf. Die erste Matrizenplatte 24.1 bleibt in jedem Fall vorhanden. Es wird nur die Crashbox 10 verformt und der Längsträger 3 bleibt intakt. Dies ist für den Fußgängerschutz bzw. für einen so genannten AZT (Allianz-Zentrum für Technik) Reparatur-Crash geeignet (16 h/km).

Fig. 8 zeigt ein mögliches Kraftniveau einer adaptiven Struktur. Es ist ein Diagramm, in dem werden die Kraft in der Koordinate und der Weg in den Abszissen dargestellt. Die Kurve unterteilt sich in drei Segmente. Das Segment a ist der Anfangsbereich der Crashbox, der elastische Bereich und der Bereich, an dem die Stoßstange zerdrückt wird. Diese Charakteristik ist von den Crashbox-Einstellungen unabhängig und immer gleich. Das Segment b spaltet sich in Abhängigkeit der unterschiedlichen Steifigkeitseinstellungen der erfindungsgemäßen Vorrichtung in drei Linien auf, nämlich b1, b2 und b3. Dabei sind natürlich auch je nach Ausprägung der Vorrichtung noch weitere Niveaus im Bereich der Crashstruktur einstellbar. Die Kurve b3 endet, weil dann die Verformung bei einem leichten Crash früh endet. b1 und b2 gehen über in den Bereich c. Hier wird der Längsträger je nach Crashwerte mehr oder weniger ebenfalls verformt Diese Charakteristik ist ebenfalls immer gleich, da keine Adaption vorliegt.

Ein wesentlicher Vorteil der Erfindung liegt darin, dass die erfindungsgemäße adaptive Crashbox ein so genanntes Trockensystem ist. Dies bedeutet, dass hier keinerlei Flüssigkeiten verwendet werden. Da es sich um ein Trockensystem handelt, können Elemente wie beispielsweise Hydraulikpumpen, Ventile für die Anpassung, Hydraulikleitungen oder Hydraulikspeicher entfallen. Insbesondere entfallen Dichtigkeitsprobleme über die Fahrzeuglebensdauer und es sind keine Umweltaspekte bezüglich giftiger Flüssigkeiten zu beachten. Eine Trockenlösung ist somit nicht nur leichter, sondern auch bauraumsparender, kostengünstiger und umweltfreundlicher.

Ein weiterer Vorteil der Erfindung liegt darin, dass die adaptive Crashbox insbesondere beim Offsetcrash eine optimale Lösung bietet. Die adaptive Crashbox zeigt besonders im Offsetcrash ihre Vorteile gegenüber einer nicht adaptiven Lösung. Da das System mit einem Sensorsystem ausgestattet ist, kann differenziert werden, ob es sich um eine Kollision gegen eine Wand ohne Offset (z.B. USNCAP mit 56 km/h) oder ob es sich um eine Kollision mit Überlappung handelt (z.B. EuroNCAP mit 64 km/h, 40% Überlappung zur Barriere). Bei der 40% Überlappung müssen der betroffene Längsträger der Karosserie und die Crashbox fast die ganze Crashenergie abbauen und somit sehr steif ausgeführt sein, wobei die adaptive Crashbox "steif" eingestellt wird. Kommen dagegen beide Längsträger der Karosserie und beide Crashboxen des Crashboxsystems zum Tragen, können die adaptive Crashboxen "weicher" eingestellt werden, um mehr Energie über den Weg abzubauen ohne hohe Spitzenbelastungen hervorzurufen.

## Patentansprüche

1. Aktuatorik, insbesondere für eine Vorrichtung zum adaptiven Abbau von Crashenergie, mit
- mindestens einem beweglichen Aktuator (31, 31', 31"), und
- einer Antriebseinheit (33, 33', 33") zum Bewegen des mindestens einen Aktuators (31, 31', 31") in Abhängigkeit von einem Steuersignal,
- wobei der mindestens eine bewegliche Aktuator (31, 31', 31") in einem korrespondierenden Freiraum (26) axial entlang einer ersten Bewegungsachse zwischen zwei Endlagen verschiebbar angeordnet ist, und
- wobei die Antriebseinheit zum Verschieben des mindestens einen beweglichen Aktuators (31, 31', 31") als Spuleneinheit (33, 33', 33") mit mindestens einer Spule (33.1, 33.2, 33.1", 33.2", 33.3") ausgeführt ist,
**dadurch gekennzeichnet, dass**
- der Aktuator (31, 31', 31") in einer Initialkonfiguration im Wesentlichen mittig zwischen den beiden Endlagen angeordnet ist.

2. Aktuatorik nach Anspruch 1, **dadurch gekennzeichnet, dass** der Aktuator (31, 31', 31") einteilig ausgeführt ist.

3. Aktuatorik nach Anspruch 1 oder 2, **dadurch gekennzeichnet, dass** der Aktuator (31, 31', 31") bei unbestromten Spulen (33.1, 33.2, 33.1", 33.2", 33.3") durch Halte- und/oder Rückstellmittel (31.1, 31.1", 32.1, 32.2, 35, 35", 38') in der Mittelstellung haltbar bzw. in die Mittelstellung rückführbar ist.

4. Aktuatorik nach Anspruch 3, **dadurch gekennzeichnet, dass** die Halte- und/oder Rückstellmittel (31.1, 31.1", 32.1, 32.2, 35, 35", 38') mindestens eine Federanordnung (38) mit mindestens einem Federelement (32.1, 32.2, 38.1`) und/oder eine Permanentmagnetanordnung mit mindestens einem Permanentmagneten (31.1, 31.1", 35, 35") umfassen.

5. Aktuatorik nach Anspruch 4, **dadurch gekennzeichnet, dass** zur Zentrierung des Aktuators (31, 31', 31 ") mehrere Halte- und/oder Rückstellmittel (31.1, 31.1", 32.1, 32.2, 35, 35", 38') verteilt am Umfang des Aktuators (31, 31', 31") angeordnet sind.

6. Aktuatorik nach einem der Ansprüche 1 bis 5, **dadurch gekennzeichnet, dass** die Aktuatorik (30") nach dem Prinzip eines Linearmotor ausgeführt ist.

7. Aktuatorik nach Anspruch 6, **dadurch gekennzeichnet, dass** mindestens zwei Spulen (33.1 ", 33.2", 33.3") und mindestens ein Permanentmagnet (31.1", 35") vorgesehen sind, wobei die mindestens zwei Spulen (33.1", 33.2", 33.3") so bestrombar sind, dass der Aktuator (31") in Abhängigkeit vom Steuersignal von der vorgegebenen Endlage oder der Mittelposition axial verschiebbar ist.

8. Vorrichtung zum adaptiven Abbau von Crashenergie mit
- einem im Crashfall deformierbaren Deformationselement (14), welches zum Abbau der Crashenergie in einer Richtung eine erste Bewegung ausführt und dabei eine plastische Verformung erfährt,
- einer Verformungseinheit (24), welche mindestens ein Verformungselement (24.1, 24.2, 24.3) zur Erzielung der plastischen Verformung aufweist, und
- einer Aktuatorik (30, 30', 30"), welche in Abhängigkeit von einem Steuersignal die plastische Verformung für den adaptiven Abbau der Crashenergie einstellt, wobei die Aktuatorik (30, 30', 30") für eine zweite Bewegung konfiguriert ist, um die plastische Verformung durch diese zweite Bewegung einzustellen, wobei in Folge dieser zweiten Bewegung die Aktuatorik (30, 30', 30") das mindestens ein Verformungselement (24.1, 24.2, 24.3) für die Einstellung der plastischen Verformung halten kann, und wobei eine Anzahl der von der Aktuatorik (30, 30', 30") gehaltenen Verformungselemente (24.1, 24.2, 24.3) vom Steuersignal abhängig ist,
**dadurch gekennzeichnet, dass**
- die Aktuatorik (30, 30', 30") nach einem der Ansprüche 1 bis 7 ausgeführt ist.

9. Vorrichtung nach Anspruch 8, **dadurch gekennzeichnet, dass** der mindestens eine bewegbare Aktuator (31, 31', 31") so axial entlang der ersten Bewegungsachse verschiebbar zwischen den zwei Endlagen angeordnet ist, dass der Aktuator (31, 31', 31") in Abhängigkeit von der aktuellen Verschiebeposition den Außenumfang von einem korrespondierenden beweglichen Verformungselement (24.2, 24.3) in mindestens einer Halteposition zumindest teilweise haltend überdeckt und in mindestens einer Freigabeposition freigibt.

10. Vorrichtung nach Anspruch 8 oder 9, **dadurch gekennzeichnet, dass** sich die nicht gehaltenen beweglichen Verformungselemente (24.2, 24.3) im Crashfall im Wesentlichen senkrecht zur Bewegungsachse wegschieben, wobei die Verformungselemente (24.2, 24.3) jeweils mehrere Segmente aufweisen.

11. Vorrichtung nach einem der Ansprüche 8 bis 10, **dadurch gekennzeichnet, dass** die beweglichen Verformungselemente (24.2, 24.3) jeweils wenigstens eine Sollbruchstelle aufweisen, welche durch die erste Bewegung des Deformationselements (14) gebrochen wird, wenn der mindestens eine Aktuator (31, 31', 31 ") bezüglich dem korrespondierenden Verformungselement (24.2, 24.3) keine Halteposition einnimmt, wobei wenigstens ein Verformungselement (24.1) unbeweglich im Gehäuse (37) der Vorrichtung (20) festgelegt ist und ohne Sollbruchstelle ausgeführt ist.

12. Vorrichtung nach einem der vorhergehenden Anspruche 8 bis 11, **dadurch gekennzeichnet, dass** eine Initialkonfiguration der Vorrichtung (20) derart ist, dass eine maximale plastische Verformung des Deformationselements (14) vorgesehen ist und alle beweglichen Verformungselemente (24.2, 24.3) von dem mindestens einen Aktuator (31, 31', 31") gehalten sind.

13. Verfahren zum adaptiven Abbau von Crashenergie in folgenden Verfahrensschritten:
- ein erstes Bewegen eines Deformationselements (14) zum Abbau der Crashenergie in einer Richtung und plastisches Verformen des Deformationselements (14) dabei,
- Einstellen der plastischen Verformung des Deformationselements (14) für den adaptiven Abbau in Abhängigkeit von einem Steuersignal durch eine Aktuatorik (30, 30', 30"), welche für eine zweite Bewegung konfiguriert ist, um die plastische Verformung des Deformationselements (14) durch diese zweite Bewegung einzustellen, wobei in Folge dieser zweiten Bewegung die Aktuatorik (30, 30', 30") mindestens ein Verformungselement (24.1, 24.2, 24.3) für die Einstellung der plastischen Verformung halten kann und eine Anzahl der von der Aktuatorik (30, 30', 30") gehaltenen Verformungselemente (24.1, 24.2, 24.3) vom Steuersignal abhängig ist,
- wobei die Aktuatorik (30, 30', 30") nach einem der Ansprüche 1 bis 7 ausgeführt ist,
- wobei der mindestens eine Aktuator (31, 31', 31 ") der Aktuatorik (30, 30', 30") in Abhängigkeit von der aktuellen Verschiebeposition den Außenumfang eines korrespondierenden beweglichen Verformungselements (24.2, 24.3) in mindestens einer Halteposition zumindest teilweise haltend überdeckt und in mindestens einer Freigabeposition freigibt,
**dadurch gekennzeichnet, dass**
- der mindestens eine Aktuator (31, 31', 31") in der Initialkonfiguration im Wesentlichen mittig zwischen den zwei Endlagen angeordnet wird.

14. Verfahren nach Anspruch 13, **dadurch gekennzeichnet, dass** in der Initialkonfiguration der Vorrichtung eine maximale plastische Verformung des Deformationselements (14) vorgesehen ist und alle beweglichen Verformungselemente (24.2, 24.3) von dem mindestens einen Aktuator (31, 31', 31 ") gehalten werden.

## Claims

1. Actuator system, in particular for a device for adaptively dissipating crash energy, comprising
- at least one movable actuator (31, 31', 31"), and
- a drive unit (33, 33', 33") for moving the at least one actuator (31, 31', 31") as a function of a control signal,
- wherein the at least one movable actuator (31, 31', 31") is arranged in a corresponding free space (26) so as to be axially displaceable between two end positions along a first movement axis,
and
- wherein the drive unit is, for the purpose of displacement of the at least one movable actuator (31, 31', 31") , embodied as a coil unit (33, 33' , 33") with at least one coil (33.1, 33.2, 33.1", 33. 2" , 33.3"),
**characterized in that**
- the actuator (31, 31', 31") is arranged, in an initial configuration, substantially centrally between the two end positions.

2. Actuator system according to Claim 1, **characterized in that** the actuator (31, 31', 31") is embodied in one piece.

3. Actuator system according to Claim 1 or 2, **characterized in that** the actuator (31, 31', 31") can be retained in the central position and/or reset to the central position by retaining and/or resetting means (33.1, 33.1" , 32.1, 32.2, 35, 35", 38') when coils (33.1, 33.2, 33. 1" , 33. 2" , 33.3") are not energized.

4. Actuator system according to Claim 3, **characterized in that** the retaining and/or resetting means (31.1, 31.1" , 32.1, 32.2, 35, 35", 38') comprise at least one spring arrangement (38) with at least one spring element (32.1, 32.2, 38.1') and/or a permanent magnet arrangement with at least one permanent magnet (31.1, 31. 1" , 35, 35").

5. Actuator system according to Claim 4, **characterized in that**, for the purpose of centring the actuator (31, 31', 31"), a plurality of retaining and/or resetting means (31.1, 31.1", 32.1, 32.2, 35, 35", 38') are arranged distributed over the circumference of the actuator (31, 31', 31").

6. Actuator system according to one of Claims 1 to 5, **characterized in that** the actuator system (30") is embodied according to the principle of a linear motor.

7. Actuator system according to Claim 6, **characterized in that** at least two coils (33.1", 33.2", 33.3") and at least one permanent magnet (31.1" , 35") are provided, wherein the at least two coils (33.1", 33.2", 33.3") can be energized in such a way that the actuator (31") can be displaced axially from the predefined end position or the central position as a function of the control signal.

8. Device for adaptively reducing crash energy having
- a deformation element (14) which can be deformed in the event of a crash and which carries out a first movement in one direction in order to dissipate crash energy, and in the process experiences a plastic deformation,
- a deformation unit (24) which has at least one deformation element (24.1, 24.2, 24.3) for bringing about the plastic deformation, and
- an actuator system (30, 30', 30") which sets the plastic deformation for the adaptive dissipation of the crash energy as a function of a control signal, wherein the actuator system (30, 30', 30") is configured for a second movement in order to set the plastic deformation by means of this second movement, wherein as a result of this second movement the actuator system (30, 30', 30") can retain the at least one deformation element (24.1, 24.2, 24.3) for the setting of the plastic deformation, and wherein the number of deformation elements (24.1, 24.2, 24.3) which are retained by the actuator system (30, 30', 30") is dependent on the control signal,
**characterized in that**
- the actuator system (30, 30', 30") is embodied according to one of Claims 1 to 7.

9. Device according to Claim 8, **characterized in that** the at least one movable actuator (31, 31', 31") is arranged between the two end positions in such a way that it can be displaced axially along the first movement axis such that, depending on the current displacement position, the actuator (31, 31', 31") covers, in an at least partially retaining fashion, the outer circumference of a corresponding movable deformation element (24.2, 24.3) in at least one retaining position and releases it in at least one release position.

10. Device according to Claim 8 or 9, **characterized in that** in the event of a crash the non-retained movable deformation elements (24.2, 24.3) slide away substantially perpendicularly with respect to the movement axis, wherein the deformation elements (24.2, 24.3) each have a plurality of segments.

11. Device according to one of Claims 8 to 10, **characterized in that** the movable deformation elements (24.2, 24.3) each have at least one predetermined break point which is broken by the first movement of the deformation element (14) when the at least one actuator (31, 31', 31") does not assume a retaining position with respect to the corresponding deformation element (24.2, 24.3), wherein at least one deformation element (24.1) is non-movably secured in the housing (37) of the device (20) and is embodied without a predetermined break point.

12. Device according to one of the preceding Claims 8 to 11, **characterized in that** an initial configuration of the device (20) is such that a maximum plastic deformation of the deformation element (14) is provided and all the movable deformation elements (24.2, 24.3) are retained by the at least one actuator (31, 31', 31").

13. Method for adaptively dissipating crash energy in the following method steps:
- a first movement of a deformation element (14) for dissipating crash energy in one direction and plastic deformation of the deformation element (14) in the process,
- setting of the plastic deformation of the deformation element (14) for the adaptive dissipation as a function of a control signal by means of an actuator system (30, 30', 30") which is configured for a second movement in order to set the plastic deformation of the deformation element (14) by means of this second movement, wherein as a result of this second movement the actuator system (30, 30', 30") can retain at least one deformation element (24.1, 24.2, 24.3) for setting the plastic deformation, and the number of deformation elements (24.1, 24.2, 24.3) retained by the actuator system (30, 30', 30") is dependent on the control signal,
- wherein the actuator system (30, 30', 30") is embodied according to one of Claims 1 to 7,
- wherein the at least one actuator system (31, 31', 31") of the actuator system (30, 30', 30") covers in at least partially retaining fashion the outer circumference of a corresponding movable deformation element (24.2, 24.3) in at least one retaining position and releases it in at least one release position depending on the current displacement position,
**characterized in that**
- the at least one actuator (31, 31', 31") is arranged, in the initial configuration, substantially centrally between the two end positions.

14. Method according to Claim 13, **characterized in that** in the initial configuration of the device a maximum plastic deformation of the deformation element (14) is provided and all the movable deformation elements (24.2, 24.3) are retained by the at least one actuator (31, 31', 31").

## Revendications

1. Ensemble d'actionneurs, en particulier pour un dispositif de dissipation adaptative de l'énergie d'une collision, l'ensemble présentant :
au moins un actionneur mobile (31, 31', 31'') et
une unité d'entraînement (33, 33', 33'') qui déplace le ou les actionneurs (31, 31', 31'') en fonction d'un signal de commande,
le ou les actionneurs mobiles (31, 31', 31'') étant disposés de manière à pouvoir coulisser axialement le long d'un premier axe de déplacement dans l'espace libre (26) situé entre deux positions d'extrémité et
l'unité d'entraînement étant conçue pour déplacer le ou les actionneurs mobiles (31, 31', 31") en tant qu'unité de bobines (33, 33', 33 ") qui présente au moins une bobine (33.1, 33.2, 33.1" , 33.2'', 33.3"), **caractérisé en ce que**
dans une configuration initiale, l'actionneur (31, 31', 31") est disposé essentiellement au milieu entre les deux positions d'extrémité.

2. Ensemble d'actionneurs selon la revendication 1, **caractérisé en ce que** l'actionneur (31, '31', 31") est en une seule pièce.

3. Ensemble d'actionneurs selon les revendications 1 ou 2, **caractérisé en ce que** lorsque les bobines (33.1, 33.2, 33.1'', 33.2'', 33.3'') ne sont pas alimentées en courant, l'actionneur (31, 31', 31") peut être maintenu en position centrale ou ramené en position centrale par des moyens de maintien et/ou de rappel (31.1, 31.1", 32.1, 32.2, 35, 35", 38').

4. Ensemble d'actionneurs selon la revendication 3, **caractérisé en ce que** les moyens de maintien et/ou de rappel (31.1, 31.1", 32.1, 32.2, 35, 35", 38') comportent au moins un ensemble élastique (38) qui compte au moins un élément élastique (32.1, 32.2, 38.1') et/ou un ensemble d'aimants permanents qui compte au moins un aimant permanent (31.1, 31.1", 35, 35").

5. Ensemble d'actionneurs selon la revendication 4, **caractérisé en ce que** plusieurs moyens de maintien et/ou de rappel (31.1, 31.1", 32.1, 32.2, 35, 35", 38') sont répartis à la périphérie de l'actionneur (31, 31', 31'') pour centrer l'actionneur (31, 31', 31').

6. Ensemble d'actionneurs selon l'une des revendications 1 à 5, **caractérisé en ce que** l'ensemble d'actionneurs (30") est réalisé selon le principe du moteur linéaire.

7. Ensemble d'actionneurs selon la revendication 6, **caractérisé en ce qu'**il présente au moins deux bobines (33.1", 33.2", 33.3") et au moins un aimant permanent (31.1", 35"), les deux ou plusieurs bobines (33.1", 33.2", 33.3'') pouvant être alimentées en courant de telle sorte que l'actionneur (31") puisse être déplacé axialement depuis la position d'extrémité prédéterminée ou la position centrale en fonction du signal de commande.

8. Dispositif de dissipation adaptative de l'énergie d'une collision, le dispositif présentant :
un élément déformable (14) apte à se déformer en cas de collision et qui exécute un premier déplacement et subit ainsi une déformation plastique en vue de dissiper l'énergie d'une collision dans une direction,
une unité déformable (24) qui présente au moins un élément déformable (24.1, 24.2, 24.3) permettant d'obtenir la déformation plastique et
un ensemble d'actionneurs (30, 30', 30'') qui établit la déformation plastique en vue de la dissipation adaptative de l'énergie de la collision en fonction d'un signal de commande, l'ensemble d'actionneurs (30, 30', 30'') étant configuré pour pouvoir exécuter un deuxième déplacement pour établir une déformation plastique suite à ce deuxième déplacement, l'ensemble d'actionneurs (30, 30', 30 ") pouvant suite à ce deuxième déplacement maintenir le ou les éléments déformables (24.1, 24.2, 24.3) pour établir la déformation plastique, le nombre des éléments déformables (24.1; 24.2, 24.3) maintenus par l'ensemble d'actionneurs (30, 30', 30") dépendant du signal de commande,
**caractérisé en ce que**
l'ensemble d'actionneurs (30, 30', 30 ") est configuré selon l'une des revendications 1 à 7.

9. Dispositif selon la revendication 8, **caractérisé en ce que** le ou les actionneurs mobiles (31, 31', 31'') sont disposés de manière à pouvoir coulisser axialement suivant le premier axe de déplacement entre les deux positions d'extrémité, **en ce que** l'actionneur (31, 31', 31'') recouvre et maintient au moins partiellement dans au moins une position de maintien la périphérie extérieure d'un élément déformable (24.2, 24.3) apte à se déplacer de manière correspondante en fonction de la position de déplacement en cours, et le libère en au moins une position de libération.

10. Dispositif selon les revendications 8 ou 9, **caractérisé en ce qu'**en cas de collision, les éléments déformables mobiles (24.2, 24.3) et non maintenus s'écartent essentiellement à la perpendiculaire de l'axe de déplacement, les éléments déformables (24.2, 24.3) présentant tous plusieurs segments.

11. Dispositif selon l'une des revendications 8 à 10, **caractérisé en ce que** les éléments déformables mobiles (24.2, 24.3) présentent tous au moins un emplacement de rupture préférentielle qui est rompu par le premier déplacement de l'élément déformable (14) lorsque le ou les actionneurs (31, 31', 31" ) ne prennent pas une position de maintien par rapport à l'élément déformable (24.2, 24.3) correspondant, au moins un élément déformable (24.1) étant fixé en position immobile dans le boîtier (37) du dispositif (20) et ne présentant pas d'emplacement de rupture préférentielle.

12. Dispositif selon l'une des revendications 8 à 11, **caractérisé en ce que** la configuration initiale du dispositif (20) est telle qu'elle permet une déformation plastique maximale de l'élément déformable (14) et que tous les éléments déformables mobiles (24.2, 24.3) sont maintenus par le ou les actionneurs (31, 31' , 31").

13. Procédé de dissipation adaptative de l'énergie d'une collision, le procédé présentant les étapes suivantes :
premier déplacement d'un élément déformable (14) en vue de dissiper l'énergie de la collision dans une direction et déformation plastique de l'élément déformable (14),
établissement de la déformation plastique de l'élément déformable (14) en vue de la dissipation adaptative en fonction d'un signal de commande, par un ensemble d'actionneurs (30, 30', 30'') configuré pour un deuxième déplacement qui permet d'établir la déformation plastique de l'élément déformable (14) par ce deuxième déplacement, l'ensemble d'actionneurs (30, 30', 30'') pouvant maintenir au moins un élément déformable (24.1, 24.2, 24.3) suite à ce deuxième déplacement en vue de l'établissement de la déformation plastique et le nombre des éléments déformables (24.1, 24.2, 24.3) maintenus par l'ensemble d'actionneurs (30, 30', 30") dépendant du signal de commande,
l'ensemble d'actionneurs (30, 30', 30'') étant configuré selon l'une des revendications 1 à 7,
le ou les actionneurs (31, 31', 31'') de l'ensemble d'actionneurs (30, 30', 30") recouvrant et maintenant au moins partiellement dans au moins une position de maintien la périphérie extérieure d'un élément déformable (24.2, 24.3) apte à se déplacer de manière correspondante en fonction de la position de déplacement en cours, et le libérant en au moins une position de libération,
**caractérisé en ce que**
dans la configuration initiale, le ou les actionneurs (31, 31', 31") sont disposés essentiellement au milieu entre les deux positions d'extrémité.

14. Procédé selon la revendication 13, **caractérisé en ce que** lorsque le dispositif est dans sa configuration initiale, la déformation plastique de l'élément déformable (14) est maximale et tous les éléments déformables mobiles (24.2, 24.3) sont maintenus par le ou les actionneurs (31, 31', 31'').
